# EUROPÄISCHE PATENTANMELDUNG

(11) **EP 3 805 576 A2**
(43) Veröffentlichungstag der Anmeldung: **14.04.2021**
(21) Anmeldenummer: 20197724.6
(22) Anmeldetag: 23.09.2020
(51) Int. Cl.: F16B 9/00, F16B 21/08, F16B 2/06, F16B 37/04, F16M 11/04, F16M 11/10, F16M 11/20, F16M 11/24, F16M 13/02

(54) **KUPPLUNG**

(30) Priorität: 08.10.2019 DE 102019127030
(71) Anmelder: "DURABLE" HUNKE & JOCHHEIM GMBH & CO. KOMMANDITGESELLSCHAFT, 58636 Iserlohn (DE)
(72) Erfinder: Maier-Hunke, Horst-Werner, 58640 Iserlohn (DE)
(74) Vertreter: Beckord & Niedlich Patentanwälte PartG mbB

(57) **Zusammenfassung**

Die Erfindung betrifft eine Kupplung (10), vorzugsweise Schnellkupplung (10), zur Ankopplung eines Gerätes (1) an einen Gerätehalter (100, 100') mit einem ersten Kupplungsteil (11) zur drehfesten Fixierung an dem Gerät (1) in einer definierten Kontaktebene (KE) und einem zweiten Kupplungsteil (41) zur, vorzugsweise gelenkigen, Verbindung mit einer Basis (B) des Gerätehalters (100), wobei das erste Kupplungsteil (11) und das zweite Kupplungsteil (41) lösbar so miteinander verbunden sind, dass sie im gekoppelten Zustand mittels eines Drehlagers (D1) um eine, vorzugsweise senkrecht, auf der Kontaktebene (KE) stehende Kupplungsachse (KA) gegeneinander drehbar sind, wobei zumindest ein erster Drehlagerteil (12) des Drehlagers (D1) in das erste Kupplungsteil (11) integriert ist. Die Erfindung betrifft ferner einen Gerätehalter (100, 100') mit einer solchen Kupplung (10).

## Beschreibung

Die Erfindung betrifft eine Kupplung zur Ankopplung eines Gerätes, insbesondere eines Monitors oder Tablets, an einen Gerätehalter mit einem ersten Kupplungsteil zur drehfesten Fixierung an dem Gerät in einer definierten Kontaktebene und mit einem zweiten Kupplungsteil zur, vorzugsweise gelenkigen, Verbindung mit einer Basis des Gerätehalters. Weiterhin betrifft die Erfindung einen Gerätehalter mit einer solchen Kupplung als Teil desselben und eine Verwendung einer solchen Kupplung.

Lösbare Kupplungen bzw. Kopplungen haben die Aufgabe, zwei Verbindungspartner möglichst vorteilhaft zu verbinden bzw. koppeln und bei Bedarf schnell und einfach voneinander zu trennen. Dazu besteht eine Kupplung zumeist aus zwei Teilen, die am jeweiligen Verbindungspartner fest montiert werden und zwischen sich eine einfach zu trennende, kraftschlüssige oder formschlüssige Verbindung bilden, um beispielsweise ein Gerät anzuschließen oder zu entfernen.

Bereits in der Praxis bekannte lösbare Kupplungen werden u. a. in Monitorhaltern eingesetzt, um beispielsweise die Installation des Monitorhalters vor Ort an einem beliebigen Bezugsobjekt separat ohne Monitor durchführen zu können, oder aber einen defekten bzw. veralteten Monitor am Monitorhalter jederzeit austauschen zu können. Insgesamt besitzen solche Monitorhalter - für welche derartige Kupplungen i. d. R. geschaffen werden - zusätzlich zumeist zahlreiche Gelenke, über welche die Kupplung wiederum indirekt an einer gerätfernen Seite an einer weiteren Komponente des Monitorhalters angeschlossen ist, so dass sich der Monitor nahezu beliebig bewegen lässt. Ein erstes Gelenk an der Kupplung dient meist dazu, den Monitor zwischen einem Querformat und einem Hochformat zu verstellen, wobei eine Drehung um eine senkrecht zur Bildschirmebene verlaufende Achse erfolgt. Die Vielzahl an Gelenken bringt jedoch nicht nur Vorteile. Sie vergrößert unter anderem den benötigten Platz, den der Monitorhalter zusätzlich zum Monitor einnimmt, und sorgt obendrein für eine mit Technik überladene, unschöne Optik. Konkret kommt es z. B. zur Verringerung der verwendbaren Arbeitsfläche eines Tisches am Arbeitsplatz, wenn ein derartiger Monitorhalter am Tisch befestigt ist und entsprechend weit über die eigentliche Arbeitsfläche des Tisches ragt.

Aus der DE 20 2016 100 617 U1 ist zudem eine Halterung für Anzeige- oder Bediengeräte bekannt, bei der ein erstes Kupplungsteil, welches an dem Anzeige- oder Bediengerät befestigt werden kann, mit einer Art Stutzen versehen ist, und ein zweites Kupplungsteil, welches mit einer Basis der Halterung verbunden ist, eine Spannhülse aufweist. An der Spannhülse befindet sich ein Schnellspannmechanismus. Zur Kopplung wird der Stutzen in die Spannhülse eingesteckt und mittels des Schnellspannmechanismus fixiert. Dieser Aufbau hat den Nachteil, dass das zu haltende Gerät zwar in einer beliebigen Stellung um die Achse des Stutzens verdreht relativ zur Halterung an dieser gekoppelt werden kann, dass aber im gekoppelten Zustand keine Drehbarkeit mehr gegeben ist. Um das Gerät relativ zur Halterung zu verdrehen, müsste erst der Schnellspannmechanismus wieder gelöst werden.

Es ist daher eine Aufgabe der vorliegenden Erfindung, eine kompakte und platzsparende Kupplung und einen entsprechenden Gerätehalter, insbesondere Monitorhalter, anzugeben.

Diese Aufgabe wird durch eine Kupplung gemäß Patentanspruch 1 und einen Gerätehalter nach Anspruch 11 gelöst.

Wie eingangs erwähnt, umfasst die erfindungsgemäße Kupplung, vorzugsweise Schnellkupplung, geräteseitig ein erstes Kupplungsteil zur drehfesten Fixierung an dem Gerät in einer definierten Kontaktebene. D. h. das erste Kupplungsteil ist gegen ungewolltes Verdrehen relativ zu einem Gerät gesichert, kann aber beispielsweise zu Reparatur- oder Austauschzwecken, z. B. mittels eines geeigneten Werkzeugs, jederzeit gelöst bzw. demontiert werden. Zum Beispiel kann das erste Kupplungsteil mittels einer Anzahl von Schrauben am Gerät, beispielsweise dem Monitor, montiert sein. Bei der erwähnten Schnellkupplung kann es sich bevorzugt auch um eine einfache Rastverbindung handeln, wie später noch erläutert wird.

Unter der "definierten Kontaktebene" ist eine virtuelle, bezüglich des Gerätes definierte Ebene gemeint, die sich entlang der Kontaktpunkte zwischen dem Gerät und dem daran montierten ersten Kupplungsteil erstreckt. Z. B. kann es sich bei einem Monitor als Gerät um eine ebene Fläche parallel zu einer Bildschirmebene bzw. Monitorebene des Monitors handeln, die sich auf einer Rückseite des betreffenden Monitors befindet und an welcher sich das erste Kupplungsteil fixieren bzw. befestigen, z. B. wie erwähnt anschrauben lässt. Dafür kann das erste Kupplungsteil eine Kontaktoberfläche bzw. Koppelplatte aufweisen, die bevorzugt nach Standard einer typischen VESA-Halterung ausgebildet ist, um eine einfache Installation bzw. Anbringung eines beliebigen Monitors mit VESA-Standard am ersten Kupplungsteil sicherzustellen.

Bei dem Gerät kann es sich vorzugsweise um eine Benutzerschnittstelle handeln, wie z. B. eine Tastatur oder insbesondere eine - vorzugsweise elektrische - Anzeigevorrichtung (also wie gesagt einen Monitor oder auch ein Tablet oder dergleichen), insbesondere also auch eine mit einem Touchscreen ausgestattete Anzeigevorrichtung. Der Gerätehalter dient somit insbesondere als Monitorhalter und/oder Tablet-Halter.

Weiter umfasst die Kupplung ein zweites Kupplungsteil zur Verbindung, direkt oder indirekt, d. h. über eine Positioniermechanik, mit der Basis des Gerätehalters. Die Basis kann z. B. ein Bodenständer für einen Boden, eine Wandhalterung für eine Wand, eine Tischklemme für einen Tisch o. Ä. sein. Unter einer Positioniermechanik ist ohne Beschränkung der Allgemeinheit eine Vorrichtung zur gezielten mechanischen Einstellung der Position (einschließlich ggf. der Orientierung) eines Gerätes im Raum gemeint, z. B. zur Einstellung der Höhe relativ zur Basis oder zur Verstellung rechts/links etc. Eine solche Positioniermechanik kann hierzu mehrere (von Hand oder motorisch) gegeneinander verstellbare Komponenten bzw. Glieder umfassen. Bevorzugt erfolgt die Verbindung des zweiten Kupplungsteils mit der Basis über eine gelenkige Positioniermechanik, d. h. eine Gelenkanordnung mit einer Anzahl von Gelenken, um den Monitor in einem definierten Bereich und in einer definierten Orientierung relativ zur Basis anordnen zu können. Bei den Gelenken kann es sich dabei besonders bevorzugt um selbsthaltende Gelenke handeln. Diese haben den Vorteil, dass das gehaltene Gerät immer in der gewünschten Schwenkstellung gesichert gehalten wird, ohne dass der Benutzer beispielsweise mit einer Hand die Schwenkstellung einstellen muss und mit einer anderen Hand gleichzeitig für eine Arretierung in dieser Schwenkstellung sorgen muss, z. B. durch eine Klemmschraube oder dergleichen, wie dies beispielsweise bisher bei den meisten Gerätehaltern der Fall ist.

Das erste Kupplungsteil und das zweite Kupplungsteil sind erfindungsgemäß, vorzugsweise zur "Bildung der Schnellkupplung", lösbar so miteinander verbunden bzw. koppelbar, dass sie im gekoppelten Zustand mittels eines Drehlagers um eine, vorzugsweise senkrecht, auf der Kontaktebene stehende Kupplungsachse gegeneinander drehbar sind. "Gegeneinander drehbar" heißt, dass die beiden betreffenden Komponenten im gekoppelten Zustand relativ zueinander um die Kupplungsachse rotiert, also ineinander gedreht werden können. Somit entsteht das Drehlager auch erst durch die "gekoppelte" Kupplung, d. h. im gekoppelten Zustand. Zumindest ein erster Drehlagerteil des Drehlagers ist hierzu in das erste Kupplungsteil integriert bzw. bildet einen Teil des Drehlagers.

Mit der erfindungsgemäßen Kupplung wird also ein besonders vorteilhaftes Drehlager gebildet, das zwei Funktionen vereint. Es ermöglicht nämlich, dass sich das zu haltende Gerät sowohl schnell und einfach mit der Positioniermechanik bzw. Basis kuppeln bzw. entkuppeln lässt, als auch, dass das Gerät relativ zum zweiten Kupplungsteil um die Kupplungsachse gedreht werden kann, beispielsweise von einer Hochformat- in eine Querformat-Stellung oder umgekehrt gedreht bzw. rotiert werden kann, wie dies insbesondere bei Monitoren oder Tablets sinnvoll ist. Es ist kein separater Lösemechanismus neben einem entsprechenden zusätzlichen Drehlager zwischen Kupplung und Basis erforderlich, wie dies sonst üblicherweise im Stand der Technik der Fall ist. Die gesamte Kupplung einschließlich des Gelenks kann somit besonders kompakt aufgebaut sein.

Ein erfindungsgemäßer Gerätehalter weist eine Basis zur Anordnung des Gerätehalters an einem Bezugsobjekt auf. Er umfasst zudem die erfindungsgemäße Kupplung zur Ankupplung eines zu haltenden Gerätes. Optional weist er eine die Basis und die Kupplung gelenkig verbindende bzw. koppelnde Positioniermechanik, z. B. wie erwähnt bevorzugt eine Gelenkanordnung, auf.

Durch eine erfindungsgemäße Verwendung einer derartigen Kupplung zur lösbaren Schnellkupplung eines Gerätes, insbesondere eines Monitors oder Tablets, an einem Gerätehalter kann also vorteilhaft dafür gesorgt werden, dass das Gerät im gekoppelten Zustand mit der Kupplung - mittels des Drehlagers in der Kupplung - um eine, vorzugsweise senkrecht, auf der Kontaktebene stehende Kupplungsachse drehbar ist.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Für die weitere Ausgestaltung des ersten und zweiten Kupplungsteils gibt es unterschiedliche Möglichkeiten.

Bevorzugt kann das zweite Kupplungsteil einen mit dem ersten Drehlagerteil werkzeuglos koppelbaren und von diesem auch werkzeuglos lösbaren bzw. entkoppelbaren zweiten Drehlagerteil des Drehlagers aufweisen. Besonders bevorzugt kann sich der zweite Drehlagerteil in einer Richtung radial, d. h. senkrecht, zur Kupplungsachse relativ zum ersten Drehlagerteil des Drehlagers, ausgehend von einem ungekoppelten Zustand, koppeln bzw. ineinanderschieben lassen. Diese Richtung wird im Folgenden als "Einschubrichtung" oder "Kopplungsrichtung" bezeichnet. Das Auseinanderschieben bzw. Entkoppeln kann dann in umgekehrter Richtung, also entgegen der Kopplungsrichtung, erfolgen. Ein Benutzer kann so besonders einfach und ohne Hilfen jederzeit das Drehlager bestimmungsgemäß verbinden bzw. entkoppeln, wobei dies bevorzugt mit am ersten Kupplungsteil anmontiertem Gerät (also beispielsweise dem Monitor oder Tablet) erfolgen kann. Z. B. kann der erste Drehlagerteil (mitsamt dem Gerät) gegen den zweiten Drehlagerteil nach oben in Vertikalrichtung, d. h. entgegen der wirkenden Schwerkraft, aus der Führung verschoben bzw. geschoben werden, um einen entkoppelten Zustand zu erhalten. Anschließend sind dann die beiden Drehlagerteile frei zueinander bewegbar und das Gerät, z. B. der Monitor, ist entkoppelt. Um sie wieder in den gekoppelten Zustand zu bringen, können sie ganz einfach in entgegengesetzter Richtung ineinander geschoben werden, d. h. der erste Drehlagerteil wird von oben nach unten, d. h. in Richtung Boden, in den zweiten Drehlagerteil eingesetzt bzw. eingeschoben. Eine solche Einschubrichtung bzw. Kopplungsrichtung, also mit der wirkenden Schwerkraft, ist besonders vorteilhaft, da das erste Kupplungsteil (unter anderem auch durch die Gewichtskraft des Geräts verstärkt) bei geeigneter Führung alleine durch die Schwerkraft in das zweite Kupplungsteil gleitet und darin gehalten wird. Dennoch ist die Einschubrichtung nicht auf eine vertikale Richtung mit der wirkenden Schwerkraft beschränkt. Beispielsweise könnte das erste Kupplungsteil aus einer horizontalen Richtung, d. h. seitlich von rechts oder links (bei einer frontalen Ansicht auf das Gerät) oder zumindest schräg von oben in das zweite Kupplungsteil eingeschoben werden, so dass dann wieder die Schwerkraft beim Einschieben unterstützend wirkt.

Bevorzugt kann der in das erste Kupplungsteil integrierte erste Drehlagerteil einen Lagerring und eine Drehscheibe bzw. Ronde umfassen.

Mit einem "Lagerring" ist hier ein Bauteil gemeint, das zumindest einen ringförmigen Abschnitt aufweist, der mit der Drehscheibe zusammenwirkt, indem er beispielsweise auf einen entsprechenden Scheibenabschnitt der Drehscheibe aufgestreift wird bzw. auf diesem drehbar gelagert wird. Die Drehscheibe ist demgegenüber ein im Wesentlichen rundes Bauteil, das zumindest einen Scheibenabschnitt mit einem Außenradius aufweist, der minimal kleiner als der Innenradius des Lagerrings ist.

Dabei kann der Lagerring im gekoppelten Zustand fest, vorzugsweise relativ streng, so auf der Drehscheibe gelagert sein bzw. so um die Drehscheibe verlaufen, dass der Lagerring und die Drehscheibe um die Kupplungsachse gegeneinander drehbar sind.

Besonders bevorzugt kann die Drehscheibe mit dem Lagerring im zweiten Drehlagerlagerteil des Drehlagers lösbar gelagert sein, wenn das erste Kupplungsteil mit dem zweiten Kupplungsteil gekoppelt ist. Dabei kann die Drehscheibe vorzugsweise gleichermaßen im zweiten Drehlagerteil und im Lagerring gleiten, wenn die Drehscheibe in axialer Richtung über den Lagerring hinausgeht.

Vorzugsweise kann das erste Kupplungsteil wie erwähnt eine sich flach, im Wesentlichen an der Kontaktebene entlang, erstreckende Koppelplatte mit einer Schnittstelle zur Befestigung am Gerät aufweisen, die zur Montage an dem Gerät dient. Vorzugsweise kann die Koppelplatte wie erwähnt mit Befestigungsmitteln nach VESA-Standard ausgebildet sein. Die Koppelplatte kann eine einfache Platte mit der Möglichkeit zur Befestigung an einem Gerät und einer zentralen Drehpunktachse bzw. Schwerpunktachse zur Kopplung mit der Drehscheibe sein. Bevorzugt kann in einer Flucht mit der Drehpunktachse zugleich ein zentrales Loch zur Durchführung einer Kopplungsschraube bzw. Schraube in der Koppelplatte ausgebildet sein. So kann die Koppelplatte gleichmäßig um die durch das zentrale Loch in der Koppelplatte verlaufende Drehpunktachse gedreht werden, wenn sie z. B. mittels der Schraube mit der Drehscheibe gekoppelt, vorzugsweise in einem Innengewinde der Drehscheibe befestigt worden ist. Besonders bevorzugt kann die Drehscheibe mit der Koppelplatte drehfest gekoppelt sein. Unter "drehfest" ist zu verstehen, dass sie im gekoppelten Zustand zwar grundsätzlich gegen unerwünschtes Verdrehen gesichert ist, jedoch bei Bedarf mit geeigneten Hilfsmitteln, z. B. einem Schraubendreher o. Ä. gelöst werden kann.

Vorzugsweise kann ein Teil bzw. Scheibenabschnitt der Drehscheibe des ersten Kupplungsteils mittels einer Stift-Loch-Verbindung, vorzugsweise mittels eines Sicherungsstifts, gesichert sein. Ein solcher Sicherungsstift kann in einem eigens dafür ausgebildeten, vorzugsweise parallel zur Kupplungsachse verlaufenden, Loch in der Koppelplatte und in einem passend dazu, vorzugsweise ebenfalls parallel zur Kupplungsachse, verlaufenden Loch in der Drehscheibe angeordnet sein. Ein solcher Stift sorgt dafür, dass ein ungewolltes Verdrehen bzw. Gegeneinander-Verdrehen der Drehscheibe gegen die bzw. relativ zur Koppelplatte verhindert wird.

Bevorzugt kann die Drehscheibe bzw. Ronde zudem zumindest zwei Scheibenabschnitte mit verschiedenen Durchmessern bzw. Radien umfassen. Grundsätzlich könnten die Scheibenabschnitte der Drehscheibe aus zwei gegeneinander drehfest verbundenen Scheiben gebildet werden. Bevorzugt können sie aber aus einem zusammengehörigen Teil bestehen bzw. einteilig ausgebildet sein. Z. B. kann an einer relativ dicken Drehscheibe ein Scheibenabschnitt gegenüber einem anderen Scheibenabschnitt radial reduziert sein, insbesondere einen deutlich reduzierteren Radius aufweisen als der andere Teil bzw. Scheibenabschnitt. Im Folgenden wird der kleinere Scheibenabschnitt auch als erster Scheibenabschnitt und der größere Scheibenabschnitt als zweiter Scheibenabschnitt bezeichnet, wobei vorzugsweise der erste Scheibenabschnitt näher an der Koppelplatte als der zweite Scheibenabschnitt angeordnet sein kann.

Vorzugsweise kann der Lagerring im gekoppelten Zustand wie erwähnt fest, besonders bevorzugt streng, so auf dem radialreduzierten Scheibenabschnitt der Drehscheibe gelagert sein bzw. so um den relativ zum Vollradius eines Flanschbereichs bzw. Flanschs radialreduzierten Scheibenabschnitt der Drehscheibe verlaufen, dass der Lagerring und die Drehscheibe um die Kupplungsachse gegeneinander drehbar sind und durch den Flansch in dieser Richtung entlang der Kupplungsachse gehalten werden. In der umgekehrten Richtung kann dann beispielsweise die Koppelplatte den Lagerring unverlierbar halten.

Ein Außendurchmesser des ersten Scheibenabschnitts kann hierzu bevorzugt so gewählt sein, dass er minimal kleiner ist als ein Innendurchmesser des oben erwähnten Lagerrings, damit der Lagerring auf den ersten Scheibenabschnitt aufgesetzt bzw. passgenau auf diesem angeordnet werden kann. Der Außendurchmesser des zweiten Scheibenabschnitts kann dagegen zumindest etwas größer sein, d. h. dementsprechend den abschließenden "Flansch" bzw. Flanschbereich am "vorgelagerten" ersten Scheibenabschnitt bilden. Somit lässt sich nämlich der Lagerring auch nur von einer Richtung aus auf den ersten Scheibenabschnitt aufstreifen bis er in einer gewünschten Endposition am zweiten Scheibenabschnitt anschlägt. Der dahinterliegende, größere zweite Scheibenabschnitt bzw. Flansch fungiert wie erwähnt vorteilhafterweise als Abrutschsicherung bzw. Anschlag für den Lagerring.

Dadurch sorgt das erste Kupplungsteil, das in sich zwei zueinander bewegliche bzw. drehbare Teilkomponenten aufweist, im gekoppelten Zustand insgesamt für eine besonders flache und auch kompakte Baueinheit.

Um den Lagerring insgesamt unverlierbar im ersten Kupplungsteil zu lagern, kann der Lagerring, vorzugsweise eng anliegend, zwischen der Koppelplatte und dem zweiten Scheibenabschnitt (mit dem großen Radius) der Drehscheibe eingeschlossen montiert werden. Der Lagerring des ersten Kupplungsteils ist dann rotierbar um die Kupplungsachse gegenüber den anderen Teilen des ersten Kupplungsteils gelagert. Somit kann dieser Lagerring selber drehfest mit dem zweiten Kupplungsteil gekoppelt werden.

Um den Lagerring im gekoppelten Zustand relativ zum zweiten Kupplungsteil drehfest zu lagern, kann er, vorzugsweise außenseitig zum zweiten Kupplungsteil weisende, im zweiten Kupplungsteil einrastende Befestigungselemente o. Ä. aufweisen. Damit ist der Lagerring stets mit der richtigen Seite in Kopplungsrichtung, vorzugsweise vertikal nach oben, angeordnet und bleibt somit auch unabhängig von der Drehung bzw. Relativbewegung des übrigen ersten Kupplungsteils, insbesondere der Drehscheibe, zum zweiten Kupplungsteil zur Betätigung der Schnellkupplung, vorzugsweise in der Vertikalrichtung, zugänglich. Denn da ja der erste Scheibenabschnitt indirekt und nur der zweite Scheibenabschnitt direkt drehbar im zweiten Drehlagerteil gelagert sein kann, kann somit ein "Sich Mitdrehen" des Lagerrings relativ zum ersten Scheibenabschnitt der Drehscheibe verhindert werden. Vorzugsweise kann so der erste Drehlagerteil des Drehlagers tatsächlich im ersten Kupplungsteil aus dem Lagerring und dem ersten Scheibenabschnitt gebildet werden.

Vorzugsweise kann der zweite Drehlagerteil des Drehlagers eine Lagerringaufnahme für den auf den ersten Scheibenabschnitt der Drehscheibe aufgestreiften Lagerring des ersten Drehlagerteils aufweisen. Die Lagerringaufnahme kann beispielsweise ein U-Auflager bzw. eine U-Auflage mit einer im Wesentlichen U-förmigen Lagerfläche sein, die entgegen der Einschubrichtung, vorzugsweise nach oben, offen ist. Z. B. kann die Lagerringaufnahme einfach ein senkrecht zur Kupplungsachse (in Einschubrichtung) verlaufender Schlitz im zweiten Drehlagerteil mit zumindest einer dem Durchmesser des Lagerrings entsprechenden Breite sein. Vorzugsweise kann der Schlitz zudem einen U-förmigen Grund aufweisen, mit einer Rundung, die an den Durchmesser des Lagerrings angepasst ist. In diesem U-förmigen Schlitz kann der Lagerring (bzw. indirekt über den Lagerring der erste Scheibenabschnitt) gelagert werden. Besonders bevorzugt kann die Lagerringaufnahme leicht schräg voneinander weg weisende U-Schenkel bzw. Seitenwände aufweisen, so dass der Lagerring zur Kopplung bzw. Entkopplung leichter in bzw. aus der Lagerringaufnahme gleitet.

Vorzugsweise kann der Schlitz der Lagerringaufnahme auch eine "Randbereichsausnehmung" bzw. oberflächige Ausnehmung an einer zur Koppelplatte weisenden Kontaktfläche des zweiten Kupplungsteils sein, in die das erste Kupplungsteil (mitsamt angekoppeltem Gerät) entlang der Einschubrichtung eingeführt und dann bevorzugt damit lösbar verbunden bzw. verrastet wird. Z. B. könnte hierzu wieder die oben erwähnte und weiter unten noch erläuterte Rastverbindung dienen. Ebenso könnte eine magnetisch wirksame Verbindung oder eine andere Verbindungsart verwendet werden. In umgekehrter Richtung kann dann wiederum das erste Kupplungsteil, gegebenenfalls nach der Lösung bzw. Entrastung, entkoppelt werden.

Alternativ könnte eine solche Randbereichsausnehmung zur Aufnahme eines Teils des ersten Kupplungsteils auch kreisförmig ausgebildet sein, d. h. somit in sämtlichen radialen Richtungen um die Kupplungsachse, unter anderem auch nach oben, geschlossen ausgebildet sein. Dies kann sich insbesondere dann anbieten, wenn eine Kopplung bzw. Entkopplung der Kupplungsteile in Kupplungsachsenrichtung und nicht senkrecht zur Kupplungsachse erfolgen soll.

Alternativ oder zusätzlich kann der zweite Drehlagerteil eine Scheibenaufnahme zur Aufnahme eines zweiten Scheibenabschnitts umfassen, falls die oben erwähnte Drehscheibe des ersten Kupplungsteils mehrere Scheibenabschnitte umfasst. Beispielsweise kann die Scheibenaufnahme zumindest die Größe des (größeren) zweiten Scheibenabschnitts aufweisen. Bevorzugt kann sie nur so groß sein, dass der zweite Scheibenabschnitt mit minimalem Spielraum in der Scheibenaufnahme gelagert ist und somit bei einer Rotation nicht ungewollt wackeln bzw. präzedieren könnte. Ansonsten kann die Scheibenaufnahme prinzipiell ähnlich wie die zuvor beschriebene Lagerringaufnahme ausgebildet sein.

Beispielsweise kann die Scheibenaufnahme dabei ein Material mit einer reibungsarmen oder alternativ einer reibungshemmenden Oberfläche aufweisen. Eine reibungsarme Oberfläche oder z. B. ein Kugellager oder dergleichen können die Rotationsbewegung des zweiten Scheibenabschnitts auf der Oberfläche der Scheibenaufnahme begünstigen. Dabei kann beispielsweise eine umlaufende Randkante des zweiten Scheibenabschnitts in der Scheibenaufnahme aufliegen und reibungsarm, vorzugsweise reibungsfrei, darin gleiten. Dies kann ohne Beschränkung der Allgemeinheit bevorzugt bei besonders schweren Geräten vorgesehen sein.

Im Gegensatz dazu könnte (z. B. für asymmetrische Geräte bzw. Geräte mit einer Unwucht) die Scheibenaufnahme alternativ rotationshemmend ausgebildet sein. Z. B. bietet sich hierzu ein rotationshemmendes Material an, das eine Rotationsbewegung zwischen der Scheibenaufnahme und dem zweitem Scheibenabschnitt der Drehscheibe - um das möglicherweise ungünstig gelagerte Gewicht des Gerätes auszugleichen - vorteilhaft hemmt. Dadurch verbleibt bzw. verweilt auch ein derartiges Gerät selbsthaltend in beliebigen Drehstellungen, selbst wenn es nicht exakt im Schwerpunkt aufgehängt ist bzw. gehalten wird.

Eine rotationshemmende Scheibenaufnahme könnte insbesondere auch dann besonders vorteilhaft sein, wenn es sich bei dem Gerät beispielsweise um ein Touchpad oder dergleichen handelt, welches bestimmungsgemäß händisch betätigt wird und damit leicht ungewollt bewegt bzw. gedreht werden könnte. Besonders bevorzugt kann aber die Rotationsbewegung durch das rotationshemmende Material gerade nur so stark eingeschränkt werden, dass das Gerät mit einem zumutbaren Krafteinsatz angenehm gedreht bzw. rotiert werden kann.

Vorzugsweise ist der Schlitz in der Lagerringaufnahme kleiner bzw. schmaler als die Scheibenaufnahme.

Insbesondere mit der zuvor beschriebenen Kontaktfläche kann besonders bevorzugt der zweite Drehlagerteil des Drehlagers im gekoppelten Zustand zumindest einen Teil der Drehscheibe des ersten Drehlagerteils in einer Richtung der Kupplungsachse bzw. in axialer Richtung, vorzugsweise gabelartig, hintergreifen. Z. B. könnten zumindest zwei vertikale, U-förmig verbundene Zinken bzw. Gabelzinken den zweiten Scheibenabschnitt, vorzugsweise seitlich, d. h. rechts und links, neben der Kupplungsachse hintergreifen bzw. zumindest teilweise umgreifen. Die Vorsilbe "hinter" bezieht sich hier auf eine Ansicht entlang der Kupplungsachse vom zweiten Drehlagerteil aus gesehen auf den ersten Drehlagerteil.

Vorzugsweise kann der zweite Drehlagerteil zwischen die Koppelplatte und den zweiten Scheibenabschnitt der Drehscheibe eingreifen, d. h. hinter dem zweiten Scheibenabschnitt, aber vor der Koppelplatte. Besonders bevorzugt kann dabei das zweite Kupplungsteil so zwischen die Koppelplatte und die Drehscheibe geschoben werden, dass es mit der oben erwähnten Kontaktfläche parallel zur Kontaktebene an der Koppelplatte flächig anliegt und zumindest den zweiten Scheibenabschnitt der Drehscheibe mit zumindest einem Teil umgreift bzw. hintergreift.

Dies sorgt dafür, dass eine Bewegung entlang der Kupplungsachse verhindert wird, da der zweite Drehlagerteil des zweiten Kupplungsteils im gekoppelten Zustand, vorzugsweise flächig, eng an bzw. zwischen der Koppelplatte sowie dem zweiten Scheibenabschnitt der Drehscheibe anliegt. Insbesondere wird damit eine besonders flache, kompakte Baueinheit aus dem ersten Kupplungsteil (umfassend die Koppelplatte, den Lagerring und die Drehscheibe) und dem zweitem Kupplungsteil gebildet. Obwohl die Drehscheibe mit dem Lagerring - und die mit dieser gekoppelte Koppelplatte, bestimmungsgemäß mitsamt einem daran befestigten Gerät - dadurch in Richtung der Kupplungsachse unverlierbar gehalten werden, können sie nach oben entgegen der wirkenden Schwerkraft senkrecht zur Kupplungsachse bei Bedarf durch einen Benutzer mittels des Lagerrings einfach gelöst werden.

Um das erste Kupplungsteil und das zweite Kupplungsteil, vorzugsweise den Lagerring und die Lagerringaufnahme, benutzerfreundlich, bequem und einfach zugänglich, bevorzugt von oben betätigbar, besonders bevorzugt voneinander lösbar, zu machen, kann das erste Kupplungsteil einen, vorzugsweise zwei, Betätigungshebel, insbesondere "Flügel", aufweisen. Dabei kann es sich um zwei längliche, vorzugsweise senkrecht vom ersten Kupplungsteil parallel abstehende, voneinander beabstandete Betätigungshebel handeln. Insbesondere können die Betätigungshebel tangential aus dem eigentlichen Lagerring heraus in einer Ringebene verlaufen, zumindest wenn der Lagerring bestimmungsgemäß im ersten Kupplungsteil angeordnet ist. Besonders bevorzugt können die Betätigungshebel selbst oder ihre Aufhängung beweglich zueinander, z. B. elastisch, ausgebildet sein. Ganz besonders bevorzugt können sie unter Vorspannung zueinander beweglich und/oder federnd, z. B. mittels einer Art Schenkelfeder vorgespannt, gelagert sein.

Zur lösbaren Kopplung bzw. Befestigung des ersten Kupplungsteils und des zweiten Kupplungsteils, vorzugsweise des Lagerrings und der Lagerringaufnahme, können das erste Kupplungsteil und das zweite Kupplungsteil miteinander wechselwirkende Befestigungselemente umfassen. Beispielsweise können die zwei Betätigungshebel einen Teil der wechselwirkenden Befestigungselemente bilden. Bevorzugt können die wechselwirkenden Befestigungselemente mittels Verrastung und/oder Klemmung miteinander gekoppelt werden. Beispielsweise können die Ausnehmungen in der Lagerringaufnahme jeweils kleine "Hakenausnehmungen" bilden und die Betätigungshebel korrespondierend dazu jeweils zumindest eine außen an den Betätigungshebeln befindliche, zur Lagerringaufnahme weisende Rastnase aufweisen. Im gekoppelten Zustand können sich dann jeweils die Rastnasen - insbesondere mittels einer nach außen gerichteten Vorspannung, die nachfolgend noch erläutert wird - in den Hakenausnehmungen einhaken.

Besonders bevorzugt können die wechselwirkenden Befestigungselemente einen Klippverschluss bzw. Steckverschluss - ähnlich wie bei Steckschnallen - bilden. Später werden noch bevorzugte Ausführungsbeispiele hierfür erläutert.

Vorzugsweise kann mittig zwischen den beiden voneinander beabstandeten Flügeln ein ähnlicher Flügel bzw. Blendenflügel senkrecht nach oben vom eigentlichen Ring des Lagerrings abstehen. Er kann den Zwischenraum zwischen den beiden Betätigungshebeln mittels einer Fläche nach Art eines "Dachs" im Wesentlichen horizontal abdecken. Er sorgt zudem sowohl für eine optische Abdeckung des Zwischenraums zwischen den beiden Betätigungshebeln als auch dafür, dass ein Einklemmen von Fingern, z. B. beim Betätigen der Flügel, verhindert werden kann.

Vorzugsweise können die zumindest zwei beweglichen Betätigungshebel bzw. Flügel des Lagerrings gegen eine nach außen oder innen gerichtete Vorspannung zueinander oder voneinander weg bewegbar sein. Dabei können die Betätigungshebel besonders bevorzugt einen Teil der Befestigungselemente aufweisen, so dass sich das erste Kupplungsteil mittels Zusammendrückens bzw. Auseinanderdrückens der Betätigungshebel vom zweiten Kupplungsteil lösen lässt. Sie können dazu im gekoppelten Zustand unter Vorspannung in eine seitliche Ausnehmung in der Lagerringaufnahme für die Betätigungshebel greifen. Zur Lösung dieser wechselwirkenden Befestigungselemente kann dann beispielsweise durch einen Benutzer ein leichter Druck nach innen auf die Flügel bzw. Betätigungshebel ausgeübt werden, so dass zumindest ein Teil der Flügel aus der Ausnehmung gleitet und damit das erste Kupplungsteil nach oben aus dem zweiten Kupplungsteil bewegt werden kann.

Alternativ ist aber auch eine umgekehrte Druckausübung bzw. Druckausführung bei einer entsprechenden Konstruktion möglich, in der die Betätigungshebel zum Entkoppeln voneinander wegbewegt werden können.

Vorzugsweise kann zumindest einer der Betätigungshebel ein vom anderen Betätigungshebel weg weisendes oder alternativ zu diesem hin weisendes, vorzugsweise ein jeweils zur Lagerringaufnahme weisendes, Klippverschlusselement, insbesondere eine Rastnase, aufweisen. Es kann im gekoppelten Zustand formschlüssig in eine der Rastnase zugeordnete und an diese angepasste Aussparung bzw. Führung der Lagerringaufnahme des zweiten Drehlagerteils des Drehlagers greifen bzw. klippen. Dabei kann der Formschluss bzw. Klippverschluss vorzugsweise mittels leichten Zusammendrückens (oder alternativ Auseinanderziehens) der Schenkel bzw. Betätigungshebel zueinander (oder voneinander weg) gelöst bzw. entklippt werden. Beispielsweise indem bei einem Klippverschluss mit zwei solchen Rastnasen beide Rastnasen aus der jeweiligen Führung heraus leicht zueinander gedrückt werden, so dass der Formschluss entkoppelt ist und ein (Gegeneinander-)Verschieben des ersten Kupplungsteils gegen das zweite Kupplungsteil entgegen der o. g. Einschubeinrichtung ermöglicht wird. Das Verschieben kann dabei wie erwähnt quer bzw. radial, vorzugsweise senkrecht, zur Kupplungsachse erfolgen.

Auf ähnliche Weise könnte alternativ zur Halterung auch ein einfacher Kraftschluss ohne ein zusätzliches formschlüssiges "Ineinanderklippen", beispielsweise einfach nur unter Nutzung einer gewissen Vorspannung, genutzt werden. Auch eine solche Halterung kann in ähnlicher Weise einfach gelöst werden.

Ein erfindungsgemäßer Gerätehalter weist wie oben erwähnt eine Basis zur Anordnung an einem Bezugsobjekt auf. Er umfasst zudem die erfindungsgemäße Kupplung zur Ankupplung eines zu haltenden Gerätes und die oben erwähnte Positioniermechanik.

Auch für die Ausgestaltung der Positioniermechanik, insbesondere auch in Form einer Gelenkanordnung, des Gerätehalters gibt es unterschiedliche Möglichkeiten.

Vorzugsweise kann die Gelenkanordnung des Gerätehalters mindestens ein, vorzugsweise selbsthaltendes, Gelenk, besonders bevorzugt mehrere solcher Gelenke, z. B. mehrere in Reihe gekoppelte oder parallel angeordnete Drehgelenke aufweisen.

Besonders bevorzugt kann das zweite Kupplungsteil an einer vom ersten Kupplungsteil weg weisenden Seite über ein, ganz besonders bevorzugt selbsthaltendes, Kippgelenk (vorzugsweise indirekt als Teil der Gelenkanordnung) relativ zur Basis des Gerätehalters drehbar gelagert sein. Damit ist das zweite Kupplungsteil dann über ein selbsthaltendes Gelenk, d. h. ein Gelenk, das in jeder eingestellten Stellung von selbst die Position hält, ohne dass ein Klemmen oder Nachziehen des Gelenks erforderlich ist, direkt oder indirekt mit der Basis gekoppelt.

Dadurch lässt sich die Kupplung mit dem zu haltenden Gerät zusätzlich nahezu beliebig in gewünschte Kippwinkel neigen bzw. kippen, jedenfalls zumindest im Rahmen der Einschränkungen, die durch den Gerätehalter selbst und/oder seine Anbringung an einem Bezugsobjekt gegeben sein können. Solche räumlichen Einschränkungen können sich beispielsweise aufgrund der Position relativ zu einem Bezugsobjekt, wie z. B. einer Tischplatte oder einer Wand, ergeben. Beispielsweise können aber auch einzelne bewegliche Glieder der Positioniermechanik, z. B. der Gelenkanordnung, des Gerätehalters aufgrund anderer Glieder des Gerätehalters zumindest teilweise bzw. in bestimmten Stellungen bewegungstechnisch beschränkt sein.

Die Positioniermechanik kann auch vorzugsweise zumindest eine Säule mit einer an einer Seite entlang der Längsrichtung der Säule verlaufenden, integrierten Nutenschiene umfassen. Mit einer solchen Nutenschiene ist eine Führungsschiene bzw. Schiene in Form einer Nut gemeint, die einen in der Nut geführten Körper auf einer Bewegungsrichtung entlang der Nut hält. Die Nutenschiene ist bevorzugt in die Säule integriert, also beispielsweise als eine zu einer Mantelfläche der Säule hin offene Nut direkt in der Säule eingeformt, z. B. indem die Säule nach Art eines Konstruktionsprofils, insbesondere Stranggussprofils, mit integrierter Nutenschiene ausgeführt wird. Ein Beispiel hierfür wird später noch erläutert. Mit der Säule kann eine lotrechte, freistehende Stütze, z. B. aus Kunststoff, Holz oder Metall (insbesondere Aluminium), mit einem (ggf. abgesehen von der Nut) runden oder polygonalen Außen-Querschnitt gemeint sein.

Besonders bevorzugt weist die Positioniermechanik eine die Säule, vorzugsweise senkrecht, passierende bzw. kreuzende Traverse auf. Unter einer Traverse ist hier ein länglicher, im Wesentlichen in einer Horizontalrichtung verlaufender Träger, Querbalken bzw. Ausleger, z. B. aus Kunststoff oder Metall, insbesondere Aluminium oder Stahl, zur Aufnahme von Nutzlasten zu verstehen, der die vorzugsweise senkrecht dazu angeordnete Säule horizontal bzw. waagrecht, vorzugsweise parallel zum Boden, kreuzt.

Diese Traverse ist bevorzugt verstellbar an der Säule befestigt. Hierzu lässt sich die Traverse mittels eines in der Nutenschiene geführten Nutensteins in einer Vertikalrichtung entlang der Säule geführt verschieben. Mit einem Nutenstein (nach Art eines Kulissensteins für eine Kulisse) ist ein in der Nutenschiene verschiebbarer bzw. geführter Körper gemeint. Dieser weist vorteilhaft zumindest ein Befestigungsmittel, z. B. eine Gewindebohrung, zur direkten oder indirekten Verbindung bzw. Verschraubung mit der Traverse auf. Der Nutenstein kann somit eine "in Längsrichtung (der Nutenschiene bzw. eines Konstruktionsprofils) frei verschiebbare" Gewindebohrung bieten. Alternativ sind aber auch andere Befestigungsmittel am Nutenstein vorstellbar. Der Nutenstein ist vorzugsweise im Wesentlichen an die Maße der Nutenschiene angepasst. Ohne Beschränkung der Allgemeinheit kann die oben erwähnte Vertikalrichtung bevorzugt die Richtung entlang einer Höhe des Gerätehalters, d. h. vom Boden weg bzw. hin zum Boden, bezeichnen, also insbesondere senkrecht zu einer Horizontalrichtung verlaufen.

Bevorzugt kann die Traverse in ihrem Verlauf in Horizontalrichtung leicht gebogen sein bzw. verlaufen, d. h. eine konkave und eine konvexe Seite aufweisen. Dadurch lässt sie sich je nach Bedarf mit der konkaven oder der konvexen Seite zum Benutzer bzw. Betrachter anordnen bzw. ausrichten und sorgt damit für eine optisch "geöffnete" oder "eher geschlossene" Anordnung von Geräten, wobei sich z. B. die "geöffnete" Anordnung für mehrere Personen und die eher "geschlossene" Anordnung für eine einzelne Person eignet.

Bevorzugt lässt sich die Traverse mittels eines Traversen-Feststellelements, beispielsweise händisch mit einem Horizontal-Drehknopf, in der Horizontalrichtung gegen die Säule, nämlich an dem in der Nutenschiene laufenden bzw. geführten Nutenstein bzw. zum Nutenstein festziehen und damit in beliebigen Höhen anordnen bzw. positionieren. Unter dem Traversen-Feststellelement ist im einfachsten Fall ein Befestigungsmittel zu verstehen, das zumindest mit einem weiteren Befestigungsmittel zusammenwirkt, d. h. sich gegen zumindest ein weiteres Befestigungsmittel, z. B. eine Gewindebohrung einer Schraubenmutter bzw. im Nutenstein, festschrauben lässt und dabei zumindest eine weitere Komponente lösbar, hier also mit der Traverse, verbindet.

Damit wird erreicht, dass so beispielsweise ein oder mehrere Geräte entlang der Traverse verteilt jeweils in Horizontalrichtung versetzt zur Säule an einer dort mit der Traverse verbundenen Kupplung gekuppelt bzw. gekoppelt werden können.

Besonders vorteilhaft an einem solchen Gerätehalter mit einer Säule und einer daran mittels eines in einer Nutenschiene der Säule geführten Nutensteins verstellbar befestigten Traverse ist allerdings, dass sich der Nutenstein beim Lösen des Traversen-Feststellelements durch den Benutzer zur gewünschten Veränderung der eingestellten Höhe der Traverse an der Säule derart in der Nutenschiene verklemmt bzw. "verkippt", dass die Traverse (samt anmontierten Geräten) so lange in Position gehalten wird, bis der Benutzer die Traverse bzw. die Geräte minimal mit einer Hand von unten umgreifend nach hinten drückt bzw. "aufrichtet". Dabei kann er dann die Traverse bzw. die an die Traverse indirekt anmontierten Geräte geführt in eine gewünschte Höhe verschieben und anschließend wieder loslassen, so dass sich wiederum der Nutenstein aufgrund der Schwerkraft ausreichend verklemmt, um dann das Traversen-Feststellelement in der neuen Position wieder festzustellen.

Ein solcher Gerätehalter ist daher auch unabhängig von der erfindungsgemäßen Kupplung vorteilhaft und kann also als eine eigenständige vorteilhafte Idee gesehen werden. Besondere synergetische Effekte ergeben sich jedoch bei einer Kombination der beiden Ideen. So lässt sich dann bei sehr flacher Bauweise zumindest ein an den Gerätehalter anmontiertes Gerät in der Höhe bzw. Vertikalrichtung einfach entlang der Säule geführt verschieben und um die Kupplungsachse z. B. in ein Hochformat oder Querformat drehen.

Vorzugsweise kann die Traverse zumindest ein mittiges Befestigungsloch bzw. einen Durchbruch für das Traversen-Feststellelement aufweisen, zumindest, wenn das Traversen-Feststellelement beispielsweise eine einfache Feststellschraube mit einem Gewindeabschnitt ist.

Besonders bevorzugt kann auch der Nutenstein ein solches Befestigungsloch mit einem Innengewinde umfassen. Es kann dann im einfachsten Fall als Traversen-Feststellelement eine längliche Feststellschraube mit einem Gewinde verwendet werden, durch die die Traverse mit dem Nutenstein die besagten Komponenten miteinander lösbar verschraubt und somit an der Säule gehalten wird.

Das Befestigungsloch kann dabei entlang einer Schraubenachse, insbesondere senkrecht zur Längsrichtung bzw. Horizontalrichtung der Traverse, quer - d. h. von einer konkaven zu einer konvexen Seite der Traverse bzw. umgekehrt - durch die Traverse verlaufen und diese dabei zentral bzw. mittig durchqueren, so dass sich die Traverse mittels des Traversen-Feststellelements, welches z. B. eine Feststellschraube sein kann, gegen den in der Nutenschiene der Säule geführten Nutenstein festziehen lässt.

Damit können sowohl die Säule - bis auf die besagte Nutenschiene - als auch die Traverse - bis auf das genannte zentrale Befestigungsloch - im Wesentlichen eine glatte, optisch ansprechende Oberfläche mit einem sehr schlichten Design aufweisen. Unter minimalen designerischen Einschränkungen und einem möglichst kleinen Kontaktbereich zwischen Säule und Traverse sorgt diese Lösung dafür, dass die Traverse in beliebigen Höhen entlang der Säule, d. h. an unterschiedlichen Stellen in Vertikalrichtung, festgestellt bzw. positioniert werden kann. Zugleich kann die Rückseite der Säule, die von der Traverse abgewandt ist, dabei frei bzw. unberührt bleiben. Sie kann damit beispielsweise zur Kabelabführung o. d. genutzt werden. Es ist zudem nicht erforderlich, dass bei der Anbringung eines kabelabführenden Elements die Rückseite der Säule ausgespart werden muss, wie dies sonst üblicherweise bei einem die Säule vollständig umgreifenden Kopplungselement der Fall ist. Z. B. kann so ein lösbarer oder ständiger Kabelmanager zur Führung von Kabeln einfach an der Rückseite der Säule angebracht bzw. befestigt werden.

Vorzugsweise kann der Gerätehalter an einer Schnittstelle zwischen Traverse und Säule zur Verbindung der Traverse mit der Säule ein Adapterelement umfassen, welches (z. B. aus Kunststoff oder Metall) vorzugsweise mit einer im Wesentlichen quaderförmigen Grundform (ggf. abgesehen von einer noch später erläuterten Einbuchtung zur Anpassung an die Säule) ausgebildet sein kann. Das Adapterelement kann eine Traversen-Durchgangsöffnung aufweisen, die an die Außenmaße des Querschnitts der Traverse angepasst ist. So kann das Adapterelement die Traverse, vorzugsweise nahezu vollumfänglich, umgreifen bzw. umschließen.

Bevorzugt kann das Adapterelement die Traverse bis auf einen relativ kleinen Spalt umschließen, so dass sich unter Schließen bzw. Reduzieren des Spalts das Adapterelement relativ zur Traverse spielfrei in der Traversen-Durchgangsöffnung fixieren lässt.

Vorzugsweise kann das Adapterelement ein Befestigungsloch zur Durchführung des oben bereits erwähnten Traversen-Feststellelements aufweisen.

Das Adapterelement kann auch eine senkrecht zur Traversen-Durchgangsöffnung verlaufende Durchgangsöffnung für die Säule aufweisen, die entsprechend an die Maße des Querschnitts der Säule angepasst ist. Das Adapterelement kann dann die Säule und die Traverse nach Art eines "Überkreuz-Rohrverbinders" mit jeweils einer Art "Schelle" umschließen und so aneinander halten.

Das Adapterelement kann aber auch, wie erwähnt, besonders bevorzugt eine zur Säule weisende zylindersegmentförmige, vorzugsweise halbzylinderförmige, Einbuchtung aufweisen. In der Einbuchtung kann hierfür das Befestigungsloch zur Verbindung zwischen dem Traversen-Feststellelement und dem Nutenstein optisch verdeckt angeordnet sein.

Bei einer solchen Ausgestaltung umschließt das Adapterelement die Säule vorteilhaft nur teilweise. Besonders bevorzugt kann dabei die Einbuchtung die Säule bzw. eine Mantelfläche der Säule so aufnehmen, dass die Säule maximal in einem 180° Winkelbereich im Querschnitt der Säule umschlossen ist.

Mittels einer derartigen Konstruktion und Anordnung des die Säule teilweise umschließenden Adapterelements kann ein Spalt zwischen dem Adapterelement und der Säule verhindert werden. D. h. auch die Verbindung zwischen Adapter und Säule ist so möglichst spielfrei.

Besonders bevorzugt kann das Adapterelement so mit der Einbuchtung zentral um die Nutenschiene angeordnet werden, dass es sich an die Mantelfläche der Säule anschmiegt. Da es so zentral auf der Nutenschiene sitzt, kann es diese zumindest immer dort lokal sowohl optisch als auch physisch verdecken, wo sich gerade die Einbuchtung des Adapterelements befindet.

Damit bleibt die rückseitige Mantelfläche der Säule - d. h. zumindest die übrige Hälfte der Mantelfläche, an der sich keine Nutenschiene befindet - frei bzw. nutzbar. Dort kann dann wie erwähnt z. B. ein Kabelhalter an die Säule geklippt werden. Ein solcher Kabelhalter sorgt dafür Kabel, die vom Monitor abgehen, physisch möglichst wenig störend und optisch aufgeräumt zu organisieren.

Ebenfalls besonders bevorzugt kann ein erfindungsgemäßer Gerätehalter, welcher eine Basis, eine Kupplung und eine Positioniermechanik aufweist, welche wiederum zumindest eine Säule und eine die Säule kreuzende Traverse aufweist, so ausgebildet sein, dass die Traverse von einer Verschiebehülse umschlossen wird, die sich in einer Horizontalrichtung entlang der Traverse verschieben lässt.

Die Verschiebehülse kann dabei eine, vorzugsweise zylinderförmige, Hülse sein, die einen Querschnitt der Traverse in montiertem Zustand vollumfänglich umschließt. Dazu kann die Verschiebehülse eine entsprechende Traversen-Durchgangsöffnung für einen Querschnitt der Traverse aufweisen, durch die die Traverse verläuft. Mit dieser die Traverse vollumfänglich umgreifenden Traversen-Durchgangsöffnung lässt sich die Verschiebehülse in einer Horizontalrichtung entlang der Traverse geführt verschieben und im Wesentlichen beliebig zumindest in einem Bereich bis zur bzw. neben der Säule positionieren. Dabei kann die Verschiebehülse direkt (einen Teil des oben erwähnten Drehgelenks bildend) oder indirekt (zusätzlich über das oben erwähnte Kippgelenk) mit der Kupplung verbunden sein.

Vorzugsweise kann die Verschiebehülse zur lösbaren Positionierung bzw. Feststellung an der Traverse ein Verschiebehülsen-Feststellelement, z. B. mit einem Vertikal-Drehknopf mit einem integrierten Gewinde, aufweisen. Hiermit kann die Verschiebehülse von unten gegen die Traverse, besonders bevorzugt vertikal bzw. parallel zur Längsrichtung der Säule, arretiert werden. Dies hat den Vorteil, dass bei der Arretierung ein sehr lokal auf die Traverse wirkender Druck nur auf die Unterseite der Traverse erfolgt. Eventuelle auf der Traverse bei einer Umpositionierung des Geräts an der Traverse auftretende Druckstellen sind daher unter normalen Bedingungen selten sichtbar.

Ein solcher Gerätehalter ist somit auch unabhängig von den Merkmalen des weiter oben beschriebenen Gerätehalters mit einem in einer Nutenschiene der Säule geführten Nutenstein und/oder der erfindungsgemäßen Kupplung vorteilhaft und kann folglich ebenfalls eine eigenständige Idee darstellen. Besondere synergetische Effekte ergeben sich allerdings auch hier bei einer Kombination der Merkmale. So lässt sich dann zumindest ein an den Gerätehalter gekuppeltes Gerät sowohl wie erwähnt in der Höhe bzw. Vertikalrichtung als auch insbesondere in der Horizontalrichtung bis zur Säule entlang zumindest einer Hälfte der Traverse in einem besonders flachen, raumsparenden Gesamtaufbau und zudem besonders elegant verfahren bzw. geführt verschieben.

Die Verschiebehülse kann ebenso wie die Säule vorzugsweise mit einer runden Mantelfläche ausgebildet sein. Durch die Mantelfläche kann dabei die oben erwähnte Traversen-Durchgangsöffnung vorzugsweise senkrecht zur Längsrichtung bzw. zu einer Drehgelenkachse des durch die Verschiebehülse gebildeten Drehgelenks zwischen Verschiebehülse und Kupplung verlaufen.

Ein Gerätehalter mit einer Säule und einer quer, insbesondere senkrecht, dazu verlaufenden Traverse ist besonders dazu geeignet, mehrere Geräte nebeneinander an der Traverse zu halten, z. B. zwei Monitore um den Displaybereich zu erweitern.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Relative Richtungsangaben wie "oben", "unten", "vertikal", "horizontal", "innenseitig", "außenseitig", "rückseitig", etc. beziehen sich hier in den Figuren auf einen für einen bestimmungsgemäßen Gebrauch an einer Tischplatte angebrachten Gerätehalter. Es zeigen:
Figur 1 eine perspektivische Sprengzeichnung eines Ausführungsbeispiels einer erfindungsgemäßen Kupplung,
Figur 2 eine perspektivische Teilansicht eines ersten Ausführungsbeispiels eines erfindungsgemäßen Gerätehalters zur Darstellung eines zweiten Kupplungsteils der Kupplung nach Figur 1 im zusammengesetzten Zustand,
Figur 3 eine perspektivische Teilansicht eines ersten Kupplungsteils der Kupplung nach Figur 1 im zusammengesetzten Zustand,
Figur 4 eine weitere perspektivische Sprengzeichnung der Kupplung nach Figur 1 mit einem Teil eines Ausführungsbeispiels eines Gerätehalters,
Figur 5 eine weitere perspektivische Teilansicht des ersten Ausführungsbeispiels des Gerätehalters zur Darstellung der Kupplung nach Figur 1 im zusammengesetzten Zustand,
Figur 6 eine perspektivische Rückansicht des ersten Ausführungsbeispiels des Gerätehalters nach den Figuren 2 und 5, mit zwei Kupplungen nach den Figuren 1 bis 5 zur Halterung von zwei Geräten,
Figur 7 eine perspektivische Sprengzeichnung einer Verschiebehülse des ersten Ausführungsbeispiels des Gerätehalters nach Figur 6,
Figur 8 eine perspektivische Sprengzeichnung eines Teils des ersten Ausführungsbeispiels des Gerätehalters nach Figur 6 zur Darstellung eines Adapterelements, einer Traverse und einer Säule,
Figur 9 eine perspektivische Rückansicht eines zweiten Ausführungsbeispiels eines Gerätehalters mit einer Kupplung nach den Figuren 1 bis 5 im zusammengesetzten Zustand.

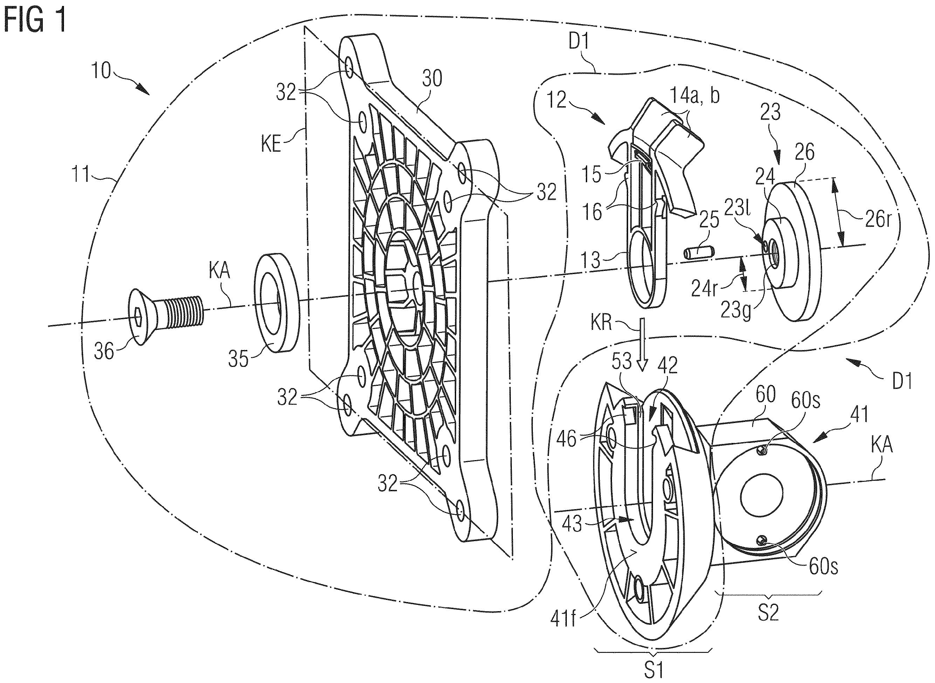

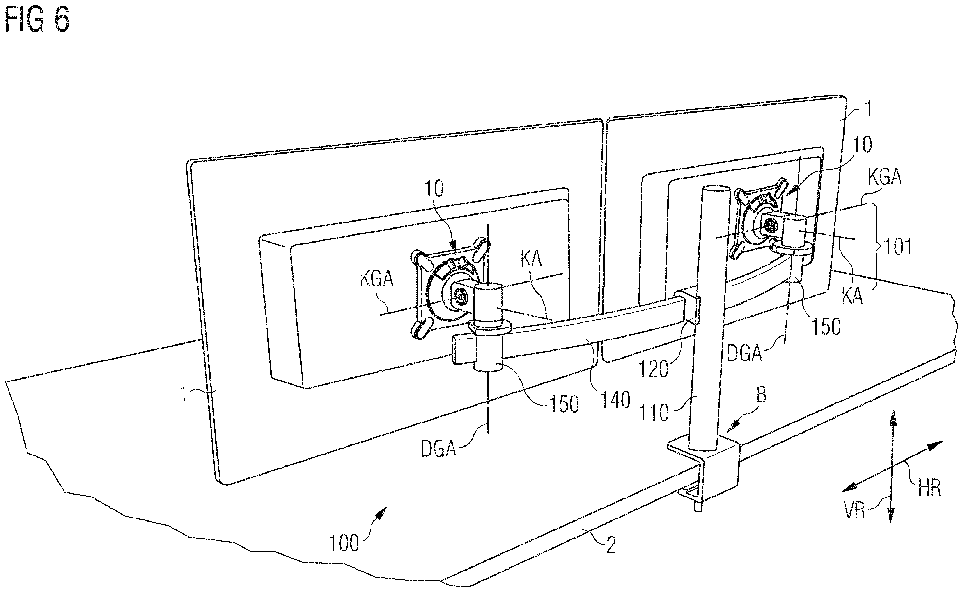

Anhand von Figur 6 wird zunächst ein erstes besonders bevorzugtes Ausführungsbeispiel eines erfindungsgemäßen Gerätehalters 100 mit einer Basis B und zumindest einer erfindungsgemäßen Kupplung 10 beschrieben, die in Figur 1 bis 5 dargestellt ist und weiter unten noch erläutert wird. Dieser Gerätehalter 100 weist hier zwei der erfindungsgemäßen Kupplungen 10 auf. Sie dienen der Ankupplung zweier Geräte 1, hier konkret zweier Monitore 1, an den Gerätehalter 100.

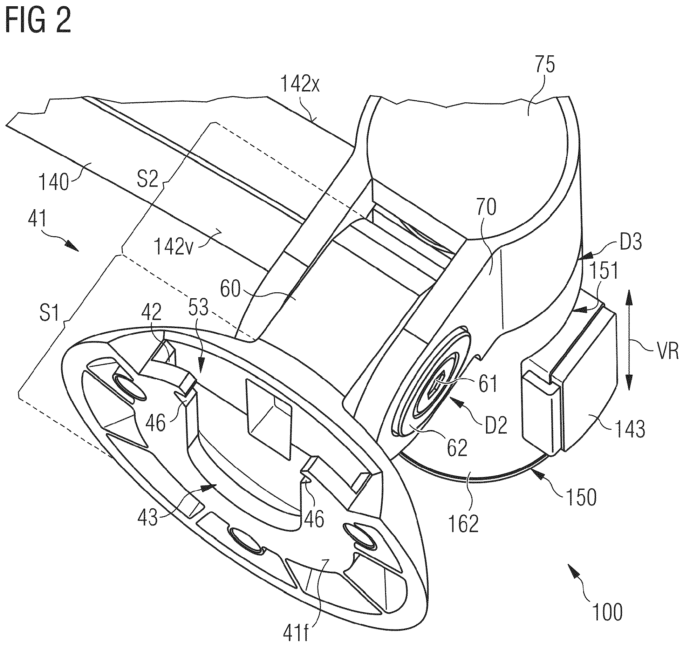

Wie aus Figur 6 hervorgeht, gehören hier neben den zuvor erwähnten Kupplungen 10 zu den Hauptkomponenten dieses Gerätehalters 100 eine Basis B zur Anordnung an einem Bezugsobjekt 2, hier konkret eine Tischplatte 2, und eine die Basis B und die Kupplungen 10 gelenkig verbindende Positioniermechanik 101, hier konkret eine Gelenkanordnung 101, welche u. a. eine zylinderförmige Säule 110 und eine die Säule 110 kreuzende, bogenförmige Traverse 140 aufweist. Dabei ist die Traverse 140 mittig lösbar über ein Adapterelement 120 mit der Säule 110 verbunden. Die Traverse 140 ist hier im Bereich ihrer Endabschnitte jeweils über eine die Traverse 140 vollumfänglich umgreifende, seitliche Verschiebehülse 150 in zwei zueinander senkrechten Achsen KGA, DGA über Gelenke D2, D3 (siehe auch Figur 2) drehbar mit den Kupplungen 10 gekoppelt. Jeweils endseitig, die Traverse 140 in Längsrichtung abschließend, ist eine Traversen-Abdeckkappe 143 als Anschlag für die ansonsten im Wesentlichen entlang der Traverse 140 verschiebbaren, seitlichen Verschiebehülsen 150 an jeder der "Kopfseiten" der Traverse 140 angebracht (siehe Figur 2).

Die hier gezeigten, durch den Gerätehalter 100 gehaltenen Monitore 1 - ebenso wie die Tischplatte 2 - gehören nicht zur Erfindung, sondern sind nur zu Anschauungszwecken dargestellt. Nicht dargestellt sind etwaige Verkabelungen bzw. Kabel, die von den Monitoren abgehen, die in der Realität jedoch selbstverständlich bei Bedarf angeschlossen wären. Da als Bezugsobjekt für den Gerätehalter 100 hier allerdings die Tischplatte 2 fungiert, sind sämtliche Richtungen relativ dazu definiert.

Ausgehend von der Basis B - hier konkret als Tischklemme B ausgeführt, um den Gerätehalter 100 insgesamt an der Tischplatte 2 zu montieren - steht die mit einem unteren Ende an der Basis B befestigte Säule 110 "freistehend" senkrecht bzw. vertikal auf der Tischplatte 2. Parallel zur Tischplatte 2, d. h. senkrecht zur Säule 110, verläuft die die Säule 110 kreuzende, leicht gebogene Traverse 140. Diesbezüglich wird im Folgenden die Richtung parallel zur Säule 110 auch als Vertikalrichtung VR und die hier leicht bogenförmige bzw. gekrümmte "Richtung" im Wesentlichen parallel zur Traverse 140 auch als Horizontalrichtung HR bezeichnet.

Ebenfalls vertikal - parallel zur Säule 110 entlang der Traverse 140 versetzt - verlaufen die beiden Drehgelenkachsen DGA der Drehgelenke D3 in Längsrichtung, also insbesondere in der Vertikalrichtung VR, der seitlichen Verschiebehülsen 150, um welche Drehgelenkachsen DGA die Kupplungen 10 mit den Monitoren 1 relativ zur jeweiligen Verschiebehülse 150 parallel zu einer Tischebene der Tischplatte 2 drehbar gelagert sind.

Weiterhin sind die beiden Monitore 1 um die Kippgelenkachsen KGA der Kippgelenke D2, die parallel zur Tischplatte 2 - also senkrecht zur Drehgelenkachse DGA - verlaufen, jeweils nach unten zur Tischplatte 2 hin bzw. nach oben von der Tischplatte 2 weg neigbar bzw. kippbar.

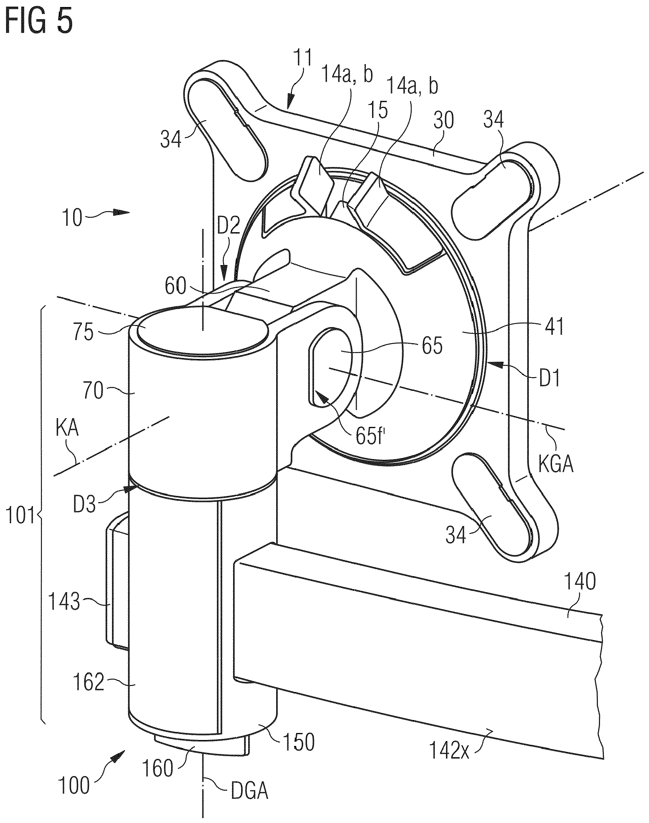

Ferner können die Monitore 1 - bei ausreichend großem Abstand zueinander - um eine senkrecht durch eine jeweilige Bildschirmfläche des Monitors 1 verlaufende Kupplungsachse KA des Drehlagers D1 der Kupplung 10, die insbesondere senkrecht zur Kippgelenkachse KGA verläuft, gedreht bzw. rotiert werden. Dieses Drehlager D1 ist in die Kupplung 10 integriert. Somit können die Monitore 1, wie dies anhand der Figuren 1 und 5 weiter unten noch erläutert wird, beispielsweise im Hochformat oder, wie hier in Figur 6 dargestellt, im Querformat angeordnet werden.

Anhand der Figuren 1 bis 5 wird nun ein besonders bevorzugtes Ausführungsbeispiel der erfindungsgemäßen Kupplung 10 für verschiedene Ausführungsbeispiele des erfindungsgemäßen Gerätehalters 100, 100' beschrieben.

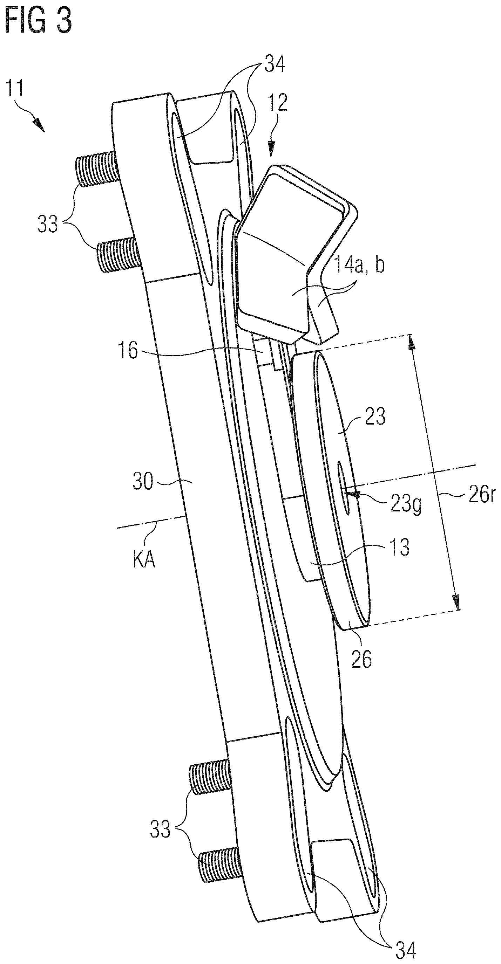

Wie insbesondere aus der Sprengzeichnung in Figur 1 hervorgeht, weist die Kupplung 10 zwei Kupplungsteile 11, 41 auf, die hier jeweils gestrichelt eingerahmt dargestellt sind. Ein erstes Kupplungsteil 11 umfasst zumindest - hier von rechts nach links entlang der Kupplungsachse KA - eine Drehscheibe 23, einen Sicherungsstift 25, einen Lagerring 13, eine Koppelplatte 30, eine erste Zentrierscheibe 35 und eine Fixierungsschraube 36, wobei die hier einzeln gezeigten Komponenten in Figur 3 in einem zusammengesetzten Zustand dargestellt sind.

Ein zweites Kupplungsteil 41, weist an einer der Koppelplatte 30 des ersten Kupplungsteils 11 zugewandten Kontaktfläche 41f auf einer Hälfte bzw. einem Drehlagerabschnitt S1 des zweiten Kupplungsteils 41 einen z. T. nach innen (in das Kupplungsteil 41) von der Kontaktfläche 41f beabstandeten zweiten Drehlagerteil 42 des Drehlagers D1 auf, wie weiter unten noch erläutert wird. Außenseitig, den innenliegenden zweiten Drehlagerteil 42 optisch verdeckend, besitzt das zweite Kupplungsteil 41 im Drehlagerabschnitt S1 - bzw. im Folgenden auch Kalotten-Abschnitt S1 genannt - des zweiten Kupplungsteils 41 die Form einer hier in Figur 1 abschnittsweise oben offenen Kugelkalotte bzw. Kugelkappe mit einem sich aus diesem koppelplattenabgewandten Kugelsegment bzw. in einem Kippgelenkabschnitt S2 fortsetzenden Kippgelenkstück 60 für das Kippgelenk D2. Das Kippgelenkstück 60 entspricht dabei einem in einem "Kuppelbereich des Kugelsegments" ausgebildeten Gabelkopfgegenstück 60 für ein Gabelgelenk 70 bzw. einen Gabelkopf 70, wie ebenfalls weiter unten noch erläutert wird.

Die Ronde 23 bzw. Drehscheibe 23 ist kreisförmig bzw. kreisscheibenförmig und umfasst entlang der Kupplungsachse KA zwei Scheibenabschnitte 24, 26 mit unterschiedlichen Radien 24r, 26r. Ein erster Scheibenabschnitt 24 ist radialreduziert mit einem kleineren, ersten Radius 24r ausgebildet und befindet sich näher an der Koppelplatte 30 als ein nachfolgend noch erläuterter zweiter Scheibenabschnitt 26. Zumindest innerhalb des ersten Scheibenabschnitts 24 ist im Zentrum der Drehscheibe 30 stirnseitig an einer zur Koppelplatte 30 weisenden Seite ein Drehscheibengewinde 23g in einer Flucht mit der Kupplungsachse KA ausgebildet. Gegen dieses ist im zusammengesetzten Zustand die Fixierungsschraube 36, beispielsweise mittels eines Schraubendrehers, festgezogen. Ebenso befindet sich im ersten Scheibenabschnitt 24 radial nach außen zum Drehscheibengewinde 23g versetzt ein verhältnismäßig kleineres Drehscheiben-Sicherungsloch 23l, in dem im zusammengesetzten Zustand der vollzylinderförmige Sicherungsstift 25 mit einem seiner beiden Enden steckt.

Ein Flansch bzw. der zweite Scheibenabschnitt 26 mit einem größeren, zweiten Radius 26r schließt sich (als Teil der Drehscheibe) an einer koppelplattenabgewandten Stirnseite der Drehscheibe 23 unmittelbar an den ersten Scheibenabschnitt 24 an. Er dient im zusammengesetzten Zustand als Anschlag bzw. Sicherung für den Lagerring 13, um den Lagerring 13 gegen Verrutschen entlang der Kupplungsachse KA zu sichern.

Der Lagerring 13 umfasst einen Ringabschnitt und drei vom Ringabschnitt senkrecht nach oben abstehende, parallel zu einer Ringebene bzw. zur Koppelplatte 30 verlaufende, voneinander beabstandete, längliche Arme 14a, 14b, 15. Sie sind radial außen, d. h. vom Ringabschnitt weg, jeweils mit einer azimutal verlaufenden Kreissegmentfläche als eine Art "Abschirmfläche" ausgebildet. Die beiden äußeren länglichen Arme 14a, 14b entsprechen Betätigungshebeln 14a, 14b bzw. Flügeln 14a, 14b, die tangential, parallel zueinander, vom Ringabschnitt abstehen. Die zuvor genannten Abschirmflächen der Flügel 14a, 14b erstrecken sich jeweils azimutal überwiegend voneinander weg. Zusätzlich zu den azimutal entlang desselben Radius verlaufenden Abschirmflächen umfassen die beiden Flügel 14a, 14b zwei zueinander parallel verlaufende, sich an die Flügel 14a, 14b radial nach außen anschließende bzw. fortsetzende rechteckige Betätigungsflächen, um die Flügel 14a, 14b zur Lösung der Kupplung 10 - wie weiter unten noch erläutert wird - azimutal in Richtung des dritten Arms bzw. Blendenflügels 15 zusammendrücken zu können. Dieser verläuft mittig zwischen den beiden äußeren Flügeln 14a, 14b in einem Abstand zu diesen und besitzt ähnlich wie jene eine azimutal verlaufende Abschirmfläche, die die mittlere Hälfte eines Zwischenraums zwischen den beiden Flügeln 14a, 14b in einer radialen Richtung abdeckt. Diese azimutale Abschirmfläche ist dabei leicht radial nach innen versetzt bzw. zurückgestellt zwischen den beiden Abschirmflächen der anderen Flügel 14a, 14b angeordnet. Sie ist zudem gerade so groß, dass die Flügel 14a, 14b bestimmungsgemäß jedenfalls bis zu dieser Abschirmfläche azimutal zusammengedrückt werden können und erst dann daran anstehen bzw. anschlagen. Somit können die Flügel 14a, 14b bei einer Betätigung auch nicht zu stark (nach innen) gebogen werden.

Außenseitig, jeweils auf einer vom Blendenflügel 15 weg weisenden Außenseite der Flügel 14a, 14b, ist eine nach außen weisende, dreieckige Rastnase 16 ausgebildet, die, wie weiter unten im Rahmen des zweiten Kupplungsteils 41 noch erläutert wird, einen Teil einer Rastverbindung mit dem zweiten Kupplungsteil 41 darstellt.

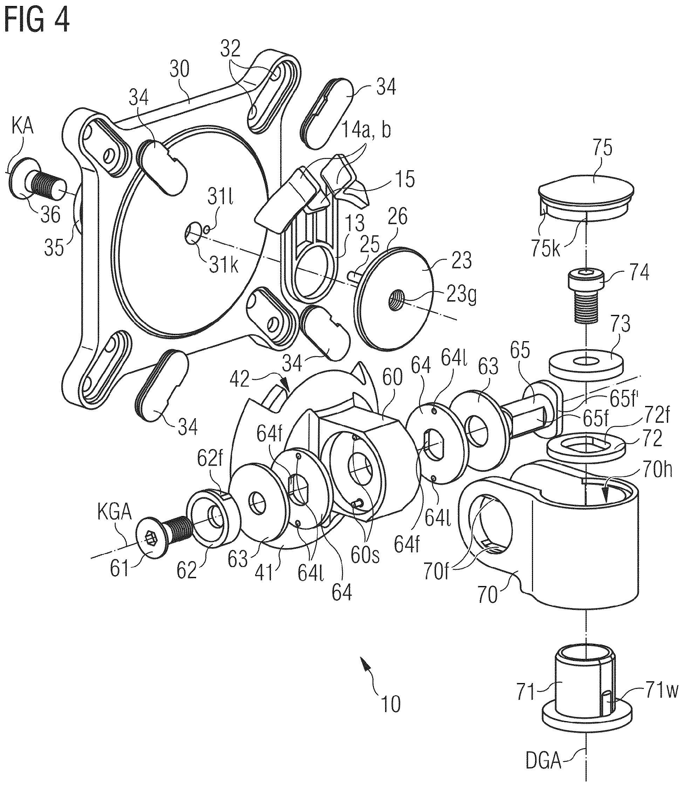

Die im Wesentlichen flache Koppelplatte 30 ist im Grundriss "Kastellburg"-förmig, d. h. quadratisch mit runden, nach außen ausgewölbten Eckbereichen und umfasst jeweils zwei radial hintereinander in den vier Eckbereichen ausgebildete Schraubenlöcher 32 zur Montage an einem Monitor nach Standard einer VESA-Halterung. Auf der im Einsatz nicht sichtbaren Vorderseite der Koppelplatte 30, deren Rückseite im Übrigen in Figur 4 gezeigt ist, ist zentral um ein Kupplungsachsenloch 31k - durch welches die Kupplungsachse KA verläuft - eine kreisförmige Einbuchtung zur Aufnahme der Zentrierscheibe 35 ausgebildet. Die Einbuchtung ist von radial sowie azimutal verlaufenden Versteifungsrippen umgeben, um die Festigkeit bzw. Steifigkeit der Koppelplatte 30 zu erhöhen sowie Material und Gewicht gegenüber einer massiv ausgebildeten Koppelplatte einzusparen. Wie also anhand von Figur 4 auf der Rückseite der Koppelplatte 30 zu erkennen ist, befindet sich dort entsprechend in einer Flucht mit dem Drehscheiben-Sicherungsloch 23l neben dem Kupplungsachsenloch 31k ein Koppelplatten-Sicherungsloch 31l, in welchem der oben genannte, in der Drehscheibe 23 steckende Sicherungsstift 25 im zusammengesetzten Zustand mit seinem anderen Ende steckt bzw. sitzt. Dadurch ist die Koppelplatte 30 im Einsatz gegen Verdrehen relativ zur Drehscheibe 23 gesichert.

Wie in Figur 4 ebenfalls zu erkennen ist, sind die Schraubenlöcher 32 in der Rückseite der Koppelplatte 30 versenkt ausgebildet. Die zugehörigen, in Figur 3 gezeigten, Kopplungsschrauben 33 werden mittels entsprechender Schrauben-Abdeckkappen 34 im zusammengesetzten Zustand paarweise optisch verdeckt, wie unter anderem in Figur 5 gezeigt ist.

Mittels dieser Kopplungsschrauben 33 kann ein beliebiges Gerät, insbesondere ein Monitor, welches Befestigungslöcher gemäß dem VESA-Standard aufweist, fest mit der Koppelplatte 30 verbunden werden. Bei einem Monitor liegt dann die Displayoberfläche parallel zur definierten Kontaktebene KE (siehe Figur 1).

Die Zentrierscheibe 35 für die Einbuchtung zur Aufnahme der Fixierungsschraube 36 für die Drehscheibe 23 ist - ähnlich einer etwas "dickeren" Beilagscheibe - kreisförmig mit einem zentralen Senkloch ausgebildet. Sie dient im zusammengesetzten Zustand sowohl der Zentrierung der Fixierungsschraube 36, als auch als zwischengelagerte "Beilagscheibe" zwischen einem Kopf der Fixierungsschraube 36 und einer kreisrunden Einbuchtung in der Koppelplatte 30 auf der dem Monitor 1 zugewandten, im Einsatz nicht sichtbaren bzw. vom zweiten Kupplungsteil 41 abgewandten Vorderseite der Koppelplatte 30 (siehe Figur 1).

Wie in Figur 3 in einem zusammengesetzten Zustand des ersten Kupplungsteils 11 zu sehen ist, bilden der Lagerring 13 und die Drehscheibe 23 dann zusammen einen, zum zweiten Drehlagerteil 42 korrespondierenden, ersten Drehlagerteil 12 des Drehlagers D1. Dabei ist der Lagerring 13 so auf dem ersten Scheibenabschnitt 24 zwischen dem zweiten Scheibenabschnitt 26 der Drehscheibe 23 und der Koppelplatte 30 angeordnet, dass der Lagerring 13 unverlierbar dazwischen gehalten wird.

Um diesen ersten Drehlagerteil 12 unter Bildung eines in sich "entkoppelbaren" Drehlagers D1 aufzunehmen, ist im Kalotten-Abschnitt S1 des zweiten Kupplungsteils 41 aneinander anschließend sowohl eine Lagerringaufnahme 43 als auch eine Scheibenaufnahme 53 zur Aufnahme des in Figur 3 gezeigten ersten Kupplungsteils 11 ausgebildet, wie besonders gut in den Figuren 1 und 2 zu sehen ist. Die Lagerringaufnahme 43 ist entsprechend dem ersten (kleineren) Scheibenabschnitt 24 der Drehscheibe 23 mit dem aufgestreiften Lagerring 13 sowohl näher an der Kontaktfläche 41f für die Koppelplatte 30 angeordnet, als auch formtechnisch an die Kontur bzw. Außenform des Lagerrings 13 angepasst ausgebildet. Gleichermaßen ist die Scheibenaufnahme 53 für den zweiten (größeren) Scheibenabschnitt 26 in einem Abstand von der Kontaktfläche 41f nach innen versetzt im zweiten Kupplungsteil 41 (konkreter im Kalotten-Teil 41k des zweiten Kupplungsteils 41) angeordnet, so dass die Lagerringaufnahme 43 den zweiten Scheibenabschnitt 26 der Drehscheibe 23 aus Sicht des Kippgelenkstücks bzw. Gabelkopfgegenstücks 60 des zweiten Kupplungsteils 41 hintergreift bzw. umgreift.

Die Lagerringaufnahme 43 und die Scheibenaufnahme 53 sind zudem U-förmig entgegen einer Einschubrichtung KR (hier nach oben) offen mit einem im Wesentlichen U-förmigen Grund ausgebildet, um den ersten Drehlagerteil 12 des in Figur 3 gezeigten ersten Kupplungsteils 11 (hier von oben) in den zweiten Drehlagerteil 42 in dieser Einschubrichtung KR bzw. Kopplungsrichtung KR einschieben bzw. "einklippen" zu können. Dabei greifen die oben beschriebenen Rastnasen 16 in beidseitig (hier im oberen Teil der Lagerringaufnahme 43) ausgesparten Führungen bzw. Aussparungen 46, welche jeweils im Wesentlichen die Form eines ausgesparten dreiseitigen Prismas aufweisen. Zum Lösen der Kupplungsteile 11, 41 voneinander können einfach wie oben beschrieben die Flügel 14a, 14b azimutal zusammengedrückt werden, so dass die Rastnasen 16 aus den Aussparungen 46 herausbewegt werden und das erste Drehlagerteil 12 (mitsamt dem damit z. B. über die Koppelplatte 30 verbundenen Gerät) entgegen der Kopplungsrichtung KR wieder aus dem zweiten Drehlagerteil 42 herausgezogen werden kann.

Unter Zusammenschau der Figuren 2 und 3 liegt also konkret die Drehscheibe 23 mit dem zweiten Scheibenabschnitt 26 direkt in der Scheibenaufnahme 53 des zweiten Drehlagerteils 42 auf und der auf den ersten Scheibenabschnitt 24 der Drehscheibe 23 aufgesetzte Lagerring 13 ist in der Lagerringaufnahme 43 des zweiten Drehlagerteils 42 des Drehlagers D1 gelagert, so dass eine ungewünschte Beweglichkeit über gewisse zulässige Toleranzen hinaus entlang der Kupplungsachse KA verhindert wird.

Das in Figur 1 nur zum Teil gezeigte Kippgelenk D2 umfasst das oben erwähnte, hier dargestellte Kippgelenkstück 60 bzw. Gabelkopfgegenstück 60 des zweiten Kupplungsteils 41, welches sich wie bereits erwähnt im Kippgelenkabschnitt S2 des zweiten Kupplungsteils 41 befindet. Es wird daher nachfolgend anhand von Figur 4 beschrieben.

Wie in Figur 4 in einem ausgesprengten Zustand des Kippgelenks D2 besser zu sehen, ist im Kippgelenkstück 60 eine kreisrunde Versenkung mit einem zentralen Durchgangsloch zur drehfesten bzw. drehgesicherten Aufnahme einer gelochten Unterlegscheibe 64 in einer Ebene parallel zur Kupplungsachse KA ausgebildet. Eine als eine Art "Bremsscheibe" fungierende Kippgelenk-Beilagscheibe 63 ist zudem außenseitig parallel zur Unterlegscheibe 64 auf einer vom Kippgelenkstück 60 weg weisenden Seite angeordnet. Zur Erzielung einer relativen Bremswirkung zwischen den beiden Scheiben 63, 64 bzw. zur Einstellung der Schwergängigkeit des Kippgelenks D2 umfasst das Kippgelenk D2 u. a. eine Kippgelenk-Schraube 61 und eine Kippgelenk-Mutter 65, welche weiter unten noch genauer beschrieben werden. Diese können - unter anderem die gelochte Unterlegscheibe 64 und die Kippgelenk-Beilagscheibe 63 einfassend - gegeneinander festgezogen bzw. eingestellt werden, so dass im Wesentlichen ein beliebiger, gewünschter Relativdruck erzeugt wird.

Wie in Figur 4 gezeigt, dienen hier konkret zwei aus der kreisrunden Versenkung des Kippgelenkstücks 60 herausstehende Stifte 60s dazu, die gelochte Unterlegscheibe 64 drehfest bzw. drehgesichert relativ zum Kippgelenkstück 60 zu halten. Genauer gesagt ist die gelochte Unterlegscheibe 64 mit zwei kleinen Verdreh-Sicherungs-Löchern 64l und ebenfalls mit einem zentralen Durchgangsloch ausgebildet, das jedoch ein rundes, aber sekantenförmig, mit zwei Innenkanten abgeflachtes Lochinnenprofil 64f aufweist. Die gelochte Unterlegscheibe 64 und die Kippgelenk-Beilagscheibe 63 haben zusammen in etwa die Größe der Versenkung des Kippgelenkstücks 60. Dieselben Komponenten - also die Stifte 60s in der kreisrunden Versenkung, eine zweite gelochte Unterlegscheibe 64 und eine zweite, entsprechend gedreht angeordnete Kippgelenk-Beilagscheibe 63 - sind ebenfalls auf der anderen, hier in Figur 4 nicht sichtbaren, Seite des Kippgelenkstücks 60 ausgebildet. Zudem ist dort die oben erwähnte Kippgelenk-Mutter 65 mit einem hohlen Bolzen mit Innengewinde und einem Zweikant-Außenprofil 65f ausgebildet, welches stirnseitig in einen d-förmigen Flansch mit einseitiger Flachkante 65f' übergeht. Der Bolzen mit dem Zweikant-Außenprofil 65f ist in etwa gerade so lang, dass er durch das Durchgangsloch des Kippgelenkstücks 60 bis zur gegenüberliegenden gelochten Unterlegscheibe 64 reicht, die ja ein entsprechendes sekantenförmig abgeflachtes Lochinnenprofil 64f aufweist. Passend für das Innengewinde der Kippgelenk-Mutter 65 vervollständigt das Kippgelenk D2 die oben erwähnte, entsprechende Kippgelenk-Schraube 61 mit einer zwischengelagerten zweiten Zentrierscheibe 62 mit oberseitig und unterseitig sekantenförmig abgeflachtem Flansch 62f.

Zur Zusammensetzung bzw. Montage des Kippgelenks D2 werden zunächst die beiden gelochten Unterlegscheiben 64 so in der Versenkung des Kippgelenkstücks 60 eingesetzt, dass sich die Stifte 60s in den Verdreh-Sicherungs-Löchern 64l befinden. Anschließend werden die Kippgelenk-Beilagscheiben 63 jeweils außenseitig auf die Unterlegscheiben 64 aufgesetzt. Dabei verschwinden jeweils die gelochten Unterlegscheiben 64 und die Kippgelenk-Beilagscheiben 63 vollständig in der kreisrunden Versenkung des Kippgelenkstücks 60. Daraufhin wird das Gabelgelenk 70 bzw. der Gabelkopf 70 mit den gelochten Schenkeln so außenseitig über das Kippgelenkstück 60 bzw. Gabelkopfgegenstück 60 mit den Kippgelenk-Beilagscheiben 63 geschoben bzw. geführt, dass sich die Durchgangslöcher in einer gemeinsamen Flucht auf der Kippgelenkachse KGA befinden. Abschließend wird von einer geeigneten Seite die Kippgelenk-Mutter 65 mit dem Bolzen entlang der Kippgelenkachse KGA durch die Durchgangslöcher bis zur zweiten gelochten Unterlegscheibe 64 auf der anderen Seite geführt, außenseitig die zweite Zentrierscheibe 62 in das abgeflachte Lochinnenprofil 70f des Gabelgelenks 70 eingesetzt und die Kippgelenk-Schraube 61 mit der Kippgelenk-Mutter 65 verschraubt bzw. gegen diese bedarfsgerecht angezogen.

Bevorzugt können die Kippgelenk-Beilagscheiben 63 aus Stahl und/oder die Unterlegscheiben 64 aus einem POM-Material bzw. POM-Kunststoff ausgebildet sein. Besonders bevorzugt ist zumindest eine der Kippgelenk-Beilagscheiben 63 mit einer zur POM-Scheibe bzw. Unterlegscheibe 64 gerändelten bzw. aufgerauten Oberfläche ausgebildet, damit die Schwergängigkeit des Kippgelenks D2 unter Zug mittels der Kippgelenk-Schraube 61 in der zugehörigen Kippgelenk-Mutter 65 noch genauer eingestellt werden kann. Dabei drückt die zweite Zentrierscheibe 62 die aufgeraute Oberfläche der Kippgelenk-Beilagscheibe 63 bremsend mehr oder weniger stark je nach Schwere der Einstellung der Kippgelenk-Schraube 61 relativ zur Kippgelenk-Mutter 65 gegen die gelochte Unterlegscheibe 64. Damit wird erreicht, dass sich das Kippgelenk D2 aufgrund der gegenseitigen Reibung der zwei besagten Scheiben 63, 64 zueinander von selbst in beliebigen Kippwinkeln hält, insbesondere mitsamt Gerät. D. h. das Kippgelenk D2 ist selbsthaltend und kann durch Einstellung der Kippgelenk-Schraube 61 gegen die Kippgelenk-Mutter 65 an unterschiedliche Gewichte von Geräten 1 angepasst werden, so dass sich das Kippgelenk D2 jederzeit von selbst hält, jedoch bei Bedarf mittels eines leichten, zusätzlichen Krafteinsatzes des Benutzers ein gewünschter, veränderter Kippwinkel eingestellt werden kann.

Wie ebenfalls in Figur 4 dargestellt ist, umfasst das Kippgelenk D2 zur Vervollständigung ein hohlzylinderförmiges Gabelgelenk bzw. einen Gabelkopf 70 mit zwei, das Kippgelenkstück bzw. Gabelkopfgegenstück 60 außenseitig greifenden, von einem Hohlzylinder 70h des Gabelgelenks 70 im Wesentlichen tangential abstehenden, gelochten Schenkeln. Einer der Schenkel weist ein versenktes, abgeflachtes Lochinnenprofil 70f zur Aufnahme des abgeflachten Flansches 62f der zweiten Zentrierscheibe 62 auf. Der andere Schenkel ist mit einer einseitig abgeflachten, d-förmigen Versenkung zur nahezu bündigen Aufnahme des Flansches mit einseitig abgeflachter Flachkante 65f' der Kippgelenk-Mutter 65 ausgebildet, wie aus Figur 5 hervorgeht.

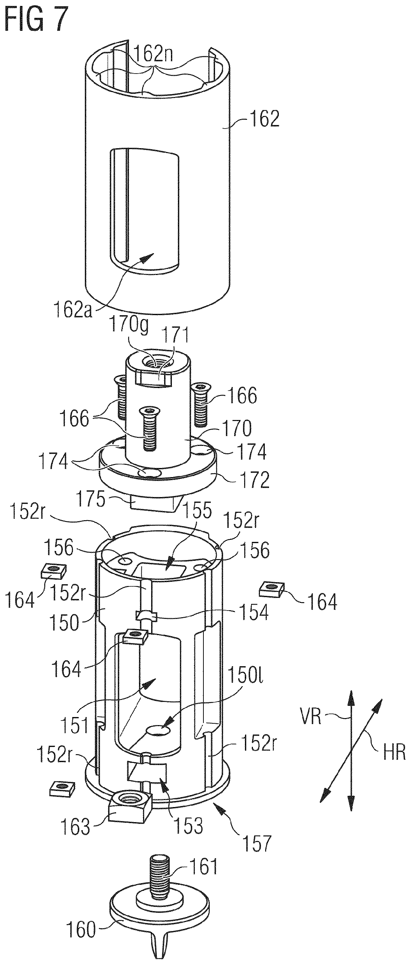

Wie außerdem anhand von Figur 4 zu erkennen ist, bildet der Hohlzylinder 70h des Gabelgelenks 70 eine Verankerung für eine Innenhülse 71 eines Drehgelenks D3. In der Innenhülse 71 ist ein in Figur 7 gezeigter Innenzapfen 170 der Verschiebehülse 150 drehbar gelagert. Dies ist u. a. in der Gesamtansicht gemäß den Figuren 5 und 6 dargestellt.

Die Innenhülse 71 und der Hohlzylinder 70h umfassen als Verdreh-Sicherung bzw. gegenseitige Verankerung ineinandergreifende Elemente. Bei der Innenhülse 71 wird dieses Element mittels eines Wulstes 71w an einem Außenprofil der Innenhülse 71 realisiert (siehe Figur 4), welcher in einer nicht erkennbaren, innenseitig im Hohlzylinder 70h ausgebildeten entsprechenden "Mulde" des Hohlzylinders 70h greift. Oberseitig ist der Hohlzylinder 70h zur Aufnahme einer Unterlegscheibe 72 mit abgeflachtem Lochinnenprofil 72f ausgebildet. Auf dieser Unterlegscheibe 72 liegt eine Beilagscheibe 73 auf, welche wie die bereits beschriebene Kippgelenk-Beilagscheibe 63 ausgebildet sein kann. Hier in Figur 4 ausgesprengt darüber dargestellt, befindet sich eine Drehgelenk-Schraube 74 zur Einstellung der Schwergängigkeit des Drehgelenks D3 gegen ein Innengewinde 170g im Innenzapfen 170 (siehe Figur 7), und noch weiter ausgesprengt darüber eine Drehgelenk-Abdeckkappe 75 zur optischen Verdeckung bzw. Abdeckung der Drehgelenk-Schraube 74 im zusammengesetzten Zustand von oben. Die Drehgelenk-Abdeckkappe 75 umfasst zur Befestigung eine Anzahl von Klemmstegen 75k bzw. Klickelementen zum Fixieren der Drehgelenk-Abdeckkappe 75 im Hohlzylinder 70h des Gabelgelenks 70.

Anhand von Figur 7 wird im Folgenden der Aufbau der seitlichen Verschiebehülsen 150 als ein Teil der Positioniermechanik 101, hier einer Gelenkanordnung 101, beschrieben. Durch diesen Aufbau wird erreicht, dass die Kupplung 10 über ein Drehgelenk D3 mit der Traverse 140 - entlang der Traverse 140 verschiebbar - verbunden werden kann.

Figur 7 zeigt hierzu eine gesprengte Detaildarstellung der einzelnen Komponenten einer seitlichen Verschiebehülse 150, welche, wie in Figur 5 gezeigt, in einem zusammengesetzten Zustand zusammen mit dem Hohlzylinder 70h des Gabelgelenks 70 das Drehgelenk D3 an der Traverse 150 zur Drehung der Kupplung 10 mit dem Monitor 1 in der Horizontalen bildet.

Das Drehgelenk D3 umfasst dazu die Verschiebehülse 150, die oberseitig in einem oberen Abschnitt den Innenzapfen 170 aufnimmt, in einem mittleren Abschnitt eine Traversen-Durchgangsöffnung 151 zur Führung der Traverse 140 umfasst und unterseitig, in einem unteren Abschnitt ein Verschiebehülsen-Feststellelement 160 bzw. einen Vertikal-Drehknopf 160 aufweist, um die Verschiebehülse 150 an einer nahezu beliebigen Stelle entlang bzw. auf der Traverse 140 lösbar zu positionieren. Insgesamt umgibt die Verschiebehülse 150 im fertig montierten Zustand eine C-förmig geschlitzte Abdeckhülse 162 zur abschließenden optisch ansprechenden Verblendung des inneren Aufbaus der Verschiebehülse 150.

Im oberen Abschnitt oberhalb der Traversen-Durchgangsöffnung 151 sind drei einzelne quaderförmige, radial zur Drehgelenkachse DGA verlaufende Schlitzaussparungen 154 seitlich in der Verschiebehülse 150 in einem 120° Abstand zueinander ausgebildet, wovon lediglich eine in Figur 7 zu erkennen ist. Im Inneren dieser drei radialen Schlitzaussparungen 154 münden drei, hier von oben parallel zur Drehgelenkachse DGA durch die Verschiebehülse 150 verlaufende Bohrungen 156. Zwischen diesen drei gleichmäßig in einem 120° Abstand zueinander angeordneten Bohrungen 156 ist ebenfalls obenseitig, zentral eine Quaderausnehmung 155 in der Verschiebehülse 150 ausgespart, in der ein quaderförmiger Sockel 175 des Innenzapfens 170 im zusammengesetzten Zustand gelagert ist.

Oberhalb des oben erwähnten quaderförmigen Sockels 175 weist der Innenzapfen 170 einen Flansch 172 auf, in dem drei ebenfalls in einem 120° Winkelabstand zueinander angeordnete, senkrecht, parallel zur Drehgelenkachse DGA, durch den Flansch 172 verlaufende, Senklöcher 174 ausgebildet sind, welche sich bei bestimmungsgemäßer Anordnung des Innenzapfens 170 mit dem Sockel 175 in der Quaderausnehmung 155 der Verschiebehülse 150 in einer Flucht mit den oben erwähnten Bohrungen 156 der Verschiebehülse 150 befinden. Weiter oberhalb des Flansches 172 befindet sich dann der eigentliche runde "Bolzenabschnitt" des Innenzapfens 170, welcher an der oberen Stirnseite mit dem oben bereits erwähnten Innengewinde 170g ausgebildet ist, gegen das die oben erwähnte Drehgelenk-Schraube 74 (siehe Figur 4) zur Einstellung der Schwergängigkeit des Drehgelenks D3 aus Innenzapfen 170 und Innenhülse 71 angezogen werden kann. Am sockelfernen, hier oberen Ende des Bolzenabschnitts des Innenzapfens 170 weist dieser zudem außenprofilseitig an zwei gegenüberliegenden Bereichen sekantenförmig abgeflachte Einkerbungen 171 zur drehfesten Kopplung mit dem sekantenförmig abgeflachten Innenlochprofil 72f der oben erwähnten Unterlegscheibe 72 (siehe auch Figur 4) auf.

Zur Verbindung des Innenzapfens 170 mit der Verschiebehülse 150 wird der Sockel 175 in der Quaderausnehmung 155 angeordnet und anschließend der Flansch 172 des Innenzapfens 170 mit den Senklöchern 174 mittels Senkkopfschrauben 166 gegen (entsprechend kleinere) Rechteckmuttern 164 in den (kleineren) radialen Schlitzaussparungen 154 der Verschiebehülse 150 in Vertikalrichtung VR angezogen bzw. verschraubt.

Im mittleren Abschnitt der Verschiebehülse 150 befindet sich - angeordnet in einer senkrecht zur Drehgelenkachse DGA, hier horizontalen, Ausrichtung - die erwähnte Traversen-Durchgangsöffnung 151 für die Traverse 140, welche im Wesentlichen einen rechteckigen Querschnitt aufweist, der an die Form der Traverse 140 angepasst ist und hierzu nach unten und oben ganz leicht ausgewölbt ist.

Zentral in der Traversen-Durchgangsöffnung 151 ist in der leicht gewölbten "Bodenfläche" ein, hier senkrecht nach unten, axial entlang der Drehgelenkachse DGA durch die Verschiebehülse 150 durchgängiges Loch 150l ausgebildet. Unterhalb der Traversen-Durchgangsöffnung 151 in einem unteren Abschnitt der Verschiebehülse 150 verläuft parallel zur Traversen-Durchgangsöffnung 151 eine im Wesentlichen quaderförmige, ebenfalls radial zur Drehgelenkachse DGA verlaufende, aber gegenüber den zuvor erwähnten radialen (kleineren) Schlitzaussparungen 154 größere Schlitzaussparung 153. Durch diese Schlitzaussparung 153 läuft das Loch 150l und mündet schließlich unterseitig innerhalb einer hier nicht zu erkennenden kreisrunden Versenkung 157. Durch dieses Loch 150l kann ein Gewinde 161 bzw. eine Gewindestange 161 des Verschiebehülsen-Feststellelements 160 bzw. des Vertikal-Drehknopfes 160 zur Arretierung gegen die Traverse 140 drückend festgeschraubt werden, indem in die (größere) radiale Schlitzaussparung 153 eine entsprechend größere Rechteckmutter 163 eingesetzt wird, so dass sich die Gewindestange 161 über die (größere) Rechteckmutter 163 gegen die Traverse 140 festziehen lässt. Dabei nimmt die oben erwähnte Versenkung 157 einen Flanschabschnitt des Vertikal-Drehknopfes 160 in sich auf.

Über die drei beschriebenen Abschnitte der Verschiebehülse 150 erstrecken sich parallel zur Drehgelenkachse DGA in Vertikalrichtung VR fünf schmale Führungsrillen 152r, die teilweise unter anderem durch die Traversen-Durchgangsöffnung 151 unterbrochen sind. Passend zu diesen Führungsrillen 152r umfasst die erwähnte Abdeckhülse 162 ihrerseits fünf schmale Führungsnasen 162n, die beim Aufstülpen bzw. Aufsetzen der Abdeckhülse 162 auf die Verschiebehülse 150 entsprechend ineinander greifen bzw. geführt sind. Zur Durchführung der Traverse 140 weist die Abdeckhülse 162 an einer von der Säule 110 abgewandten Außenseite eine analoge Traversen-Durchgangsöffnung 162a mit einem Querschnitt entsprechend der Traversen-Durchgangsöffnung 151 der Verschiebehülse 150 auf. An der zur Säule 110 weisenden, gegenüberliegenden Innenseite der Abdeckhülse 162 weist sie einfach einen vertikal durchgehenden Schlitz zumindest in der Breite der Traversen-Durchgangsöffnung 162a der Außenseite auf.

Mittels der beschriebenen Konstruktion der Verschiebehülsen 150 lässt sich jede der Verschiebehülsen 150 beliebig auf der jeweiligen Hälfte der Traverse 140 verschieben und dort, hier von unten, bequem werkzeuglos gegen die Traverse 140 feststellen. Durch die Anordnung des Verschiebehülsen-Feststellelements 160 an einer Unterseite der Traverse 140 entsteht auch keinerlei optische Beeinträchtigung.

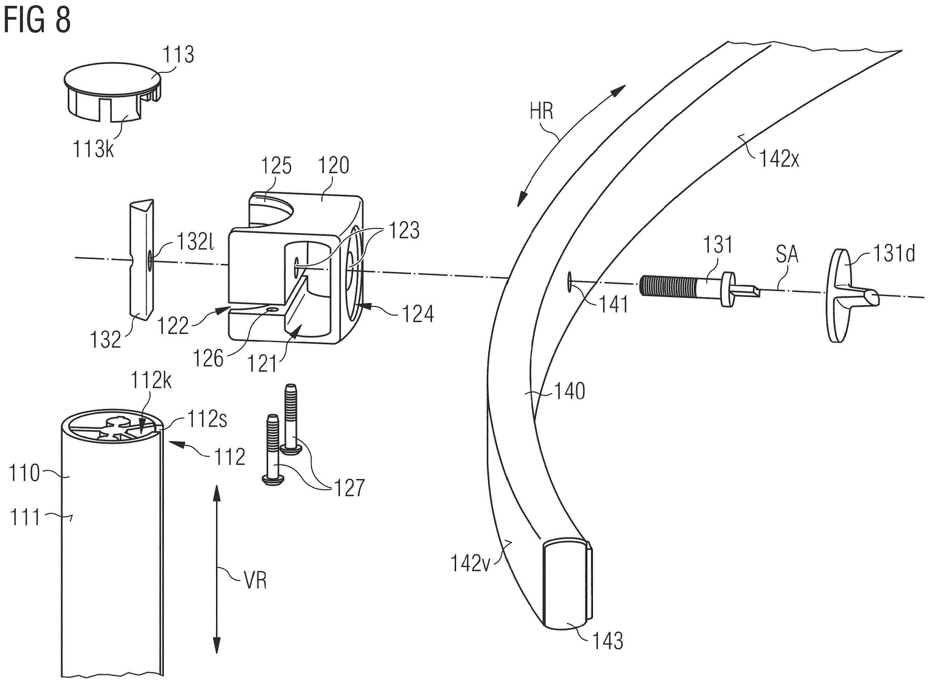

Im Folgenden wird anhand von Figur 8 die Montage der Traverse 140 an der Säule 110 detailliert beschrieben, mittels welcher sich die Traverse 140 in der Höhe entlang der Säule 110 positionieren lässt. Hierzu zeigt Figur 6 beispielhaft einen entsprechenden zusammengesetzten Zustand einer möglichen Position bzw. Höheneinstellung der Traverse 140 an der Säule 110.

Zur höhenverstellbaren Kopplung der Traverse 140 entlang der Säule 110 umfasst die Positioniermechanik 101 des Gerätehalters 100 ein Adapterelement 120, welches die Traverse 140 in einer Traversen-Durchgangsöffnung 121 aufnimmt und damit die Traverse 140 verschiebbar entlang einer Längserstreckungsrichtung der Säule 110 (im Folgenden als Vertikalrichtung VR bezeichnet, da die Säule 110 i. d. R. vertikal steht) lagert.

Das Adapterelement 120 ist im Wesentlichen (bis auf die nachfolgend beschriebene Einbuchtung 152) quaderförmig und umfasst die senkrecht zur Vertikalrichtung VR verlaufende, im Wesentlichen rechteckige (an den Querschnitt der Traverse 140 angepasste) Traversen-Durchgangsöffnung 121 zur nahezu vollumfänglich umgreifenden Aufnahme der Traverse 140 im Hochformat. Weiter weist es wie erwähnt eine im Wesentlichen zylindersegmentförmige, hier konkret halbzylinderförmige, Einbuchtung 125 auf, deren Zylinderachse in Vertikalrichtung VR verläuft.

Diese Einbuchtung 125 befindet sich von der Traverse 140 aus gesehen entlang einer waagrecht verlaufenden Schraubenachse SA hinter der Traversen-Durchgangsöffnung 121, d. h. zwischen der Traversen-Durchgangsöffnung 121 und der Säule 110, und schmiegt sich im zusammengesetzten Zustand mit ihrer konkaven Seite an die Säule 110 bzw. umgreift die Säule 110 zumindest auf einem Teilumfang, wie in Figur 6 zu sehen ist. Der Abschnitt des Adapterelements 120 zwischen der Traversen-Durchgangsöffnung 121 und der Einbuchtung 125 wird durch einen, hier horizontalen, Schlitz 122 in einen oberen und einen unteren Teil geteilt.

Insgesamt erstrecken sich axial entlang der waagrechten, senkrecht bzw. quer zur Horizontalrichtung HR (der Traverse 140) verlaufenden, Schraubenachse SA durch die Traverse 140 und das Adapterelement 120 jeweils in einer Flucht liegende - den einzelnen Komponenten zugeordnete, aber sich in zusammengesetztem Zustand durchgängig fortsetzende - Befestigungslöcher 141, 123. Ein erstes Befestigungsloch 141 erstreckt sich dabei quer zur Horizontalrichtung HR durch die bogenförmige Traverse 140 von einer konkaven Seite 142v zu einer konvexen Seite 142x bzw. umgekehrt. Ein weiteres Befestigungsloch 123 erstreckt sich dann durch das Adapterelement 120 hindurch, nämlich senkrecht durch die Traversen-Durchgangsöffnung 121 und die Einbuchtung 125 des Adapterelements 120.

Durch diese Befestigungslöcher 141, 123 wird zur Befestigung ein Traversen-Feststellelement 131 mit einem an einem Endabschnitt befindlichen Außengewinde durchgeführt und in einer Gewindebohrung 132l eines Nutensteins 132 eingeschraubt, so dass die Traverse 140, das Adapterelement 120 sowie der Nutenstein 132 miteinander verbunden sind. Die Gewindebohrung 132l im Nutenstein 132 ist quer durch den Nutenstein 132 durchgängig ausgebildet.

Durch die Befestigungslöcher 141, 123 und die Gewindebohrung 132l lassen sich die genannten Komponenten (Traverse 140, Adapterelement 120, Nutenstein 132) mittels eines Horizontal-Drehknopf 131d als Teil des Traversen-Feststellelements 131 von einem Benutzer händisch zusammenziehen. Die Funktion des Nutensteins 132 zur Halterung der Traverse 140 an der Säule 110 wird nachfolgend noch erläutert.

Im montierten Zustand befindet sich die Traverse 140, anders als in der Sprengzeichnung in Figur 7 dargestellt, nicht vor dem Adapterelement 120 bzw. zwischen dem Adapterelement 120 und dem Traversen-Feststellelement 131, sondern innerhalb der Traversen-Durchgangsöffnung 121 des Adapterelements 120. Das Traversen-Feststellelement 131 fügt sich dann mit einem Flansch des Horizontal-Drehknopfs 131d in eine kreisförmige Versenkung 124 des Adapterelements 120 und zieht den Nutenstein 132 relativ zum Adapterelement 120 gegen eine Innenseite der Nutenschiene 112 und somit das Adapterelement 120 gegen die Säule 110.

Der Nutenstein 132 ist hier ein länglicher, trapezförmiger Quader mit der erwähnten Gewindebohrung 132l zum Verschrauben bzw. Einschrauben des Traversen-Feststellelements 131. Er gleitet in einem in Längsrichtung der Säule 110 an einer Seite innenliegenden, radial nach außen hin zur Mantelfläche 111 der Säule 110 breiter werdenden Kanal 112k in der Säule 110. Dabei weist die Mantelfläche 111 der Säule 110 einen Spalt 112s zum Kanal 112k auf. Durch diesen Spalt 112s, der durch überstehende Begrenzungen bzw. Seitenwände des Kanals 112k bzw. der Mantelfläche 111 gebildet wird, ist der Kanal 112k nach außen hin offen bzw. zugänglich. Relativ zum innenliegenden Kanal 112k ist der Spalt 112s deutlich schmaler. Vorzugsweise ist der Spalt 112s des Kanals 112k aber durchgängig zumindest so breit wie das Feststellelement 131 (bzw. ein Gewindeabschnitt des Feststellelements 131), und zugleich schmaler als der am Feststellelement 131 angeschraubte Nutenstein 132. Damit gleitet der Nutenstein 132 also geführt in der Nutenschiene 112, wobei das im Nutenstein 132 eingeschraubte Traversen-Feststellelement 131 durch den Spalt 112s aus dem Kanal 112k hinausragt bzw. in den Kanal 112k hineinragt. Eine flache, zum Spalt 112s weisende Seite des im Querschnitt dreieckigen Nutensteins 132, auf der sich auch die Gewindebohrung 132l befindet, kann dadurch vom Traversen-Feststellelement 131 gleichmäßig gegen den "Überstand" bzw. die Begrenzungen des Kanals 112k gezogen werden. D. h. der Nutenstein 132 hintergreift den Überstand des Kanals 112k der Nutenschiene 112.

Bei der Montage kann der Nutenstein 132 von einer Oberseite der Säule 110 in den Kanal 112k eingeschoben werden. Ähnlich zur oben erwähnten Drehgelenk-Abdeckkappe 75, umfasst die Säule 110 hierzu eine Säulen-Abdeckkappe 113, die ebenfalls zur Befestigung mit einer Anzahl von Klemmstegen 113k bzw. Klickelementen zum Fixieren der Säulen-Abdeckkappe 75 an der Oberseite der Säule 110 ausgebildet sein kann. Mit dieser Säulen-Abdeckkappe 113 wird dann der Kanal bzw. die Säule 110 nach oben hin nach Einsetzen des Nutensteins 132 geeignet verschlossen.

Um die Traverse 140 zusätzlich, unabhängig vom Traversen-Feststellelement 131, relativ zum Adapterelement 120, insbesondere entlang der Horizontalrichtung HR der Traverse 140, zu fixieren, umfasst das Adapterelement 120 zwei in Vertikalrichtung VR parallel zur Einbuchtung 125 sowie senkrecht durch den o. g. Schlitz 122 verlaufende (Vertikal-)Löcher 126 zur Aufnahme zweier Klemmschrauben 127 zum spielfreien Festklemmen der Traverse 140 in der Traversen-Durchgangsöffnung 121 des Adapterelements 120. Die Vertikal-Löcher 126 umfassen dazu zumindest oberhalb des Schlitzes 122 ein passendes Innengewinde, vorzugsweise zumindest dann, wenn das Adapterelement 120 beispielsweise aus Metall ausgebildet ist.

Alternativ zu den hier nicht erkennbaren Innengewinden im Adapterelement 120 könnten die Klemmschrauben 127 im oberen Bereich des Adapterelements 120 auch mit geeigneten Rechteckmuttern gekontert sein, die z. B. in entsprechenden Schlitzaussparungen, ähnlich den oben erwähnten Schlitzaussparungen, über die Einbuchtung 125 im Adapterelement 120 eingesetzt werden könnten.

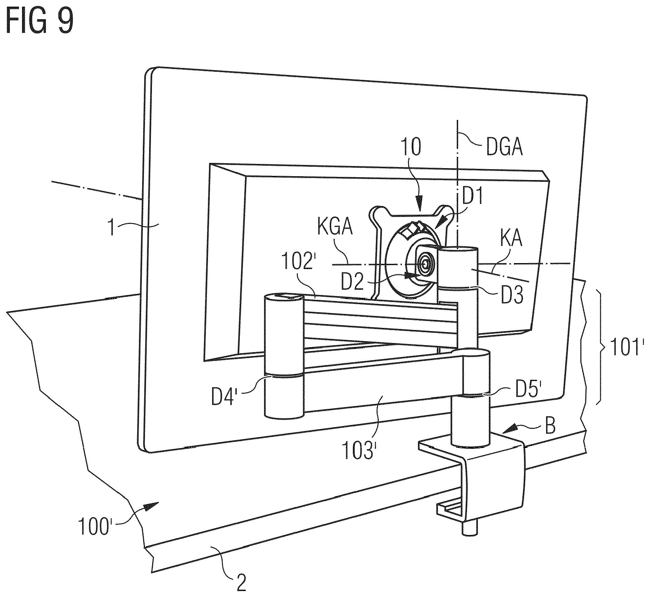

In Figur 9 wird abschließend noch ein zweites bevorzugtes Ausführungsbeispiel eines erfindungsgemäßen Gerätehalters 100 gezeigt. Dieser Gerätehalter 100' ist auch mit einer erfindungsgemäßen Kupplung 10 ausgestaltet, weist aber eine andere Gelenkanordnung 101' auf, die wie hier gezeigt alternativ zur Gelenkanordnung 101 an der Basis B montiert werden kann oder zusätzlich - wie hier nicht gezeigt - zur Gelenkanordnung 101 an einer der seitlichen Verschiebehülsen 150 des Gerätehalters 100 zwischengeschaltet sein kann.

Bei der in Figur 9 gezeigten Ausführungsform umfasst die Gelenkanordnung 101' - zusätzlich zum Drehgelenk D3 am Hohlzylinder 70h des Gabelgelenks 70 - zwei weitere, ähnliche Drehgelenke D4', D5', die einen höhenverstellbaren bzw. in der Höhe schwenkbaren - ein bewegliches Parallelgramm bildenden - Doppelarm 102' und einen horizontalen Arm 103' gelenkig miteinander bzw. mit der Basis B verbinden. Am anderen Ende des Doppelarms 102', an dem dieser nicht mit dem horizontalen Arm 103' verbunden ist, ist dieser entsprechend unter Bildung des Drehgelenks D3 mit einem nicht zu erkennenden, innenliegenden Innenzapfen im Hohlzylinder 70h gelagert.

Bei der oben erwähnten, hier nicht gezeigten Ausführungsform des Gerätehalters 100 mit der Gelenkanordnung 101 und einer zusätzlichen Gelenkanordnung 101' an zumindest einer der seitlichen Verschiebehülsen 150 kann der horizontale Arm 103' mit einer entsprechenden Innenhülse (als Teil desselben) - ohne die in Figur 9 gezeigte Basis B - direkt mit dem Innenzapfen 170 der seitlichen Verschiebehülse 150 gekoppelt werden. Dabei entsteht das Drehgelenk D5' diesmal zwischen der betreffenden Verschiebehülse 150 an der Traverse 140 und dem horizontalen Arm 103', so dass die Gelenkanordnung 101, 101' insgesamt beispielsweise zumindest die Gelenke D1, D2, D3, D4', D5' einfach oder mehrfach aufweisen kann. Gegebenenfalls kann hierzu die Basis B entsprechend modifiziert sein, so dass sie den Gerätehalter 100 jedenfalls stabil hält bzw. ein entsprechendes Gegengewicht aufweist, um mindestens die zusätzlichen Arme 102', 103' problemlos in beliebigen Positionen bzw. Stellungen halten zu können.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. So kann der Gerätehalter auch so ausgebildet sein, dass er mehr als ein Gerät, insbesondere mehrere Monitore oder Tablets, halten kann. Ebenso kann auch eine andere Basis verwendet werden, z. B. eine "Durchtisch-Lösung", bei der die Tischklemme nicht an der Kante der Tischplatte sitzt, sondern in einer Öffnung innerhalb einer Tischfläche der Tischplatte, oder eine Basis zum Festschrauben an einer Wand oder dergleichen. Ebenso können Details der Konstruktion modifiziert werden. Zum Beispiel kann die Koppelplatte des Gerätehalters an anders genormte Geräte angepasst sein. Ferner sind die gezeigten Monitore sowie die nicht gezeigten Tablets untereinander beliebig austauschbar und/oder kombinierbar. Alternativ oder zusätzlich dazu kann die Traverse von weiteren geeigneten, in den zuvor gezeigten Ausführungsbeispielen nicht beschriebenen Verschiebehülsen umschlossen sein, an denen sich jeweils beispielsweise ein Tablet-Halter für ein Tablet befindet. Zudem können beispielsweise auch andere Befestigungselemente als die beschriebenen Feststellelemente zum Feststellen der Traverse an der Säule oder der Verschiebehülsen an der Traverse verwendet werden. Zum Beispiel könnte auch die gezeigte bogenförmige Traverse andersherum angeordnet sein, um eine konvexe Bildschirmfront zu generieren. Weiterhin schließt die Verwendung der unbestimmten Artikel "ein" bzw. "eine" nicht aus, dass die betreffenden Merkmale auch mehrfach vorhanden sein können. Ebenso schließt der Begriff "Anordnung" nicht aus, dass die betreffende Komponente aus mehreren zusammenwirkenden Teilkomponenten besteht, die gegebenenfalls auch räumlich verteilt sein können.

### Bezugszeichenliste

- 1: Gerät
- 2: Bezugsobjekt / Tischplatte
- 10: Kupplung
- 11: erstes Kupplungsteil
- 12: erster Drehlagerteil
- 13: Lagerring
- 14a, b: Betätigungshebel / Flügel
- 15: Blendenflügel
- 16: Klippverschlusselement / Rastnase
- 23: Ronde / Drehscheibe
- 23l: Drehscheiben-Sicherungsloch
- 23g: Drehscheibengewinde
- 24: erster Scheibenabschnitt
- 24r: erster Radius
- 25: Sicherungsstift
- 26: zweiter Scheibenabschnitt
- 26r: zweiter Radius
- 30: Koppelplatte
- 31k: Kupplungsachsenloch
- 31l: Koppelplatten-Sicherungsloch
- 32: Schraubenlöcher
- 33: Kopplungsschrauben
- 34: Schrauben-Abdeckkappen
- 35: erste Zentrierscheibe
- 36: Fixierungsschraube
- 41: zweites Kupplungsteil
- 41f: Kontaktfläche
- 41k: Kalotten-Teil
- 42: zweiter Drehlagerteil
- 43: Lagerringaufnahme
- 46: Aussparung
- 53: Scheibenaufnahme
- 60: Kippgelenkstück / Gabelkopfgegenstück
- 60s: Stifte
- 61: Kippgelenk-Schraube
- 62: zweite Zentrierscheibe
- 62f: abgeflachter Flansch
- 63: Kippgelenk-Beilagscheiben
- 64: gelochte Unterlegscheiben
- 64f: abgeflachtes Lochinnenprofil
- 64l: Verdreh-Sicherungs-Löcher
- 65: Kippgelenk-Mutter
- 65f: Zweikant-Außenprofil
- 65f': Flansch mit einseitiger Flachkante
- 70: Gabelgelenk / Gabelkopf
- 70f: abgeflachtes Lochinnenprofil
- 70h: Hohlzylinder
- 71: Innenhülse
- 71w: Wulst
- 72: Unterlegscheibe
- 72f: abgeflachtes Lochinnenprofil
- 73: Beilagscheibe
- 74: Drehgelenk-Schraube
- 75: Drehgelenk-Abdeckkappe
- 75k: Klemmstege
- 100, 100': Gerätehalter
- 101, 101': Positioniermechanik / Gelenkanordnung
- 102': Doppelarm, höhenverstellbar
- 103': Arm, horizontal
- 110: Säule
- 111: Mantelfläche
- 112: Nutenschiene
- 112k: Kanal
- 112s: Spalt
- 113: Säulen-Abdeckkappe
- 113k: Klemmstege
- 120: Adapterelement
- 121: Traversen-Durchgangsöffnung des Adapterelements
- 122: Schlitz
- 123: Befestigungsloch
- 124: Versenkung
- 125: Einbuchtung
- 126: (Vertikal-)Löcher
- 127: Klemmschrauben
- 131: Traversen-Feststellelement
- 131d: Horizontal-Drehknopf
- 132: Nutenstein
- 132l: Gewindebohrung
- 140: Traverse
- 141: Befestigungsloch
- 142v: konkave Seite
- 142x: konvexe Seite
- 143: Traversen-Abschlusskappen
- 150: Verschiebehülsen
- 150l: Loch
- 151: Traversen-Durchgangsöffnungen der Verschiebehülsen
- 152r: Führungsrillen
- 153: radiale Schlitzaussparung
- 154: radiale Schlitzaussparungen
- 155: Quaderausnehmung
- 156: Bohrungen
- 157: Versenkung
- 160: Verschiebehülsen-Feststellelement / Vertikal-Drehknopf
- 161: Gewinde / Gewindestange
- 162: Abdeckhülse
- 162a: Aussparung
- 162n: Führungsnasen
- 163: (größere) Rechteckmutter
- 164: (kleinere) Rechteckmuttern
- 166: Senkkopfschrauben
- 170: Innenzapfen
- 170g: Innengewinde
- 171: Einkerbungen
- 172: Flansch
- 174: Senklöcher
- 175: Sockel

- B: Basis
- D1: Drehlager
- D2: Kippgelenk
- D3: Drehgelenk
- D4': Drehgelenk
- D5': Drehgelenk
- HR: Horizontalrichtung
- KA: Kupplungsachse / Drehlagerachse
- KE: Kontaktebene
- KGA: Kippgelenkachse
- DGA: Drehgelenkachse
- KR: Einschubrichtung / Kopplungsrichtung
- VR: Vertikalrichtung
- S1: Drehlagerabschnitt / Kalotten-Abschnitt
- S2: Kippgelenkabschnitt
- SA: Schraubenachse

## Patentansprüche

1. Kupplung (10), vorzugsweise Schnellkupplung (10), zur Ankopplung eines Gerätes (1) an einen Gerätehalter (100, 100') mit
- einem ersten Kupplungsteil (11) zur drehfesten Fixierung an dem Gerät (1) in einer definierten Kontaktebene (KE),
- einem zweiten Kupplungsteil (41) zur, vorzugsweise gelenkigen, Verbindung mit einer Basis (B) des Gerätehalters (100, 100'),
wobei das erste Kupplungsteil (11) und das zweite Kupplungsteil (41) lösbar so miteinander verbunden sind, dass sie im gekoppelten Zustand mittels eines Drehlagers (D1) um eine, vorzugsweise senkrecht, auf der Kontaktebene (KE) stehende Kupplungsachse (KA) gegeneinander drehbar sind, wobei zumindest ein erster Drehlagerteil (12) des Drehlagers (D1) in das erste Kupplungsteil (11) integriert ist.

2. Kupplung nach Anspruch 1, wobei das zweite Kupplungsteil (41) einen mit dem ersten Drehlagerteil (12) koppelbaren zweiten Drehlagerteil (42) des Drehlagers (D1) aufweist, wobei vorzugsweise der zweite Drehlagerteil (42) in einer Richtung (KR) radial zur Kupplungsachse (KA) relativ zum ersten Drehlagerteil (12) des Drehlagers (D1) entkoppelbar ist.

3. Kupplung nach Anspruch 1 oder 2, wobei der erste Drehlagerteil (12) einen Lagerring (13) und eine Drehscheibe (23) umfasst, wobei der Lagerring (13) so auf der Drehscheibe (23) gelagert ist, dass der Lagerring (13) und die Drehscheibe (23) um die Kupplungsachse (KA) gegeneinander drehbar sind,
und wobei ganz besonders bevorzugt die Drehscheibe (23) mit dem Lagerring (13) im zweiten Drehlagerlagerteil (42) des Drehlagers (D1) lösbar gelagert ist, wenn das erste Kupplungsteil (11) mit dem zweiten Kupplungsteil (41) gekoppelt ist.

4. Kupplung nach einem der vorstehenden Ansprüche, wobei die Drehscheibe (23) zumindest zwei Scheibenabschnitte (24, 26) mit verschiedenen Radien (24r, 26r) umfasst, wobei besonders bevorzugt der Lagerring (13) auf einem ersten Scheibenabschnitt (24) aufgesetzt ist, der einen kleineren Radius (24r) als ein zweiter Scheibenabschnitt (26) aufweist,
und/oder wobei das erste Kupplungsteil (11) eine sich flach, im Wesentlichen an der Kontaktebene (KE) entlang erstreckende Koppelplatte (30) aufweist, an der vorzugsweise die Drehscheibe (23) drehfest gekoppelt ist,
wobei vorzugsweise der erste Scheibenabschnitt (24) näher an der Koppelplatte (30) als der zweite Scheibenabschnitt (26) angeordnet ist.

5. Kupplung nach Anspruch 3 oder 4, wobei der zweite Drehlagerteil (42) des Drehlagers (D1) eine Lagerringaufnahme (43) für den Lagerring (13) des ersten Drehlagerteils (12) und/oder eine Scheibenaufnahme (53) zur Aufnahme des zweiten Scheibenabschnitts (26) der Drehscheibe (23) aufweist.

6. Kupplung nach einem der Ansprüche 3 bis 5, wobei der zweite Drehlagerteil (42) des Drehlagers (D1) im gekoppelten Zustand zumindest einen Teil (26) der Drehscheibe (23) des ersten Drehlagerteils (12) in einer Richtung der Kupplungsachse (KA) hintergreift.

7. Kupplung nach einem der vorstehenden Ansprüche, wobei das erste Kupplungsteil (11) und das zweite Kupplungsteil (41), vorzugsweise der Lagerring (13) und die Lagerringaufnahme (43), wechselwirkende Befestigungselemente (16, 46), insbesondere mittels Verrastung und/oder Klemmung wechselwirkende Befestigungselemente (16, 46), aufweisen, um das erste Kupplungsteil (11) und das zweite Kupplungsteil (41) lösbar miteinander zu koppeln,
wobei bevorzugt die wechselwirkenden Befestigungselemente (16, 46) einen Klippverschluss (16, 46) bilden.

8. Kupplung nach einem Ansprüche 3 bis 7, wobei der Lagerring (13) zumindest zwei bewegliche voneinander beabstandete, vorzugsweise elastische, Betätigungshebel (14a, 14b) aufweist, die gegen eine Vorspannung zueinander oder voneinander weg bewegbar sind, wobei die Betätigungshebel (14a, 14b) vorzugsweise einen Teil der Befestigungselemente (16, 46) aufweisen.

9. Kupplung nach Anspruch 8, wobei zumindest einer der Betätigungshebel (14a) ein vom anderen Betätigungshebel (14b) weg weisendes oder zu diesem hin weisendes Klippverschlusselement (16), vorzugsweise eine Rastnase (16), aufweist, das im gekoppelten Zustand formschlüssig in eine der Rastnase (16) zugeordnete Aussparung (46) des zweiten Drehlagerteils (42) des Drehlagers (D1) greift.

10. Kupplung nach einem der vorstehenden Ansprüche, wobei das zweite Kupplungsteil (41) in einem vom ersten Kupplungsteil (11) wegweisenden Kippgelenkabschnitt (S2), vorzugsweise indirekt über eine Positioniermechanik (101, 101') des Gerätehalters (100, 100'), über ein Kippgelenk (D2) relativ zur Basis (B) des Gerätehalters (100, 100') drehbar gelagert ist.

11. Gerätehalter (100, 100') für zumindest ein zu haltendes Gerät (1), mit
- einer Basis (B) zur Anordnung an einem Bezugsobjekt (2),
- einer Kupplung (10) nach einem der Ansprüche 1 bis 10 zur Ankupplung eines zu haltenden Gerätes (1),
- optional einer die Basis (B) und die Kupplung (10) verbindenden, vorzugsweise gelenkigen, Positioniermechanik (101, 101').

12. Gerätehalter (100), insbesondere nach Anspruch 11, für zumindest ein zu haltendes Gerät (1), mit
- einer Basis (B) zur Anordnung an einem Bezugsobjekt (2),
- einer Kupplung (10) zur Ankupplung eines zu haltenden Gerätes (1),
- einer die Basis (B) und die Kupplung (10) verbindenden, vorzugsweise gelenkigen, Positioniermechanik (101), welche zumindest eine Säule (110) mit einer integrierten Nutenschiene (112) und eine die Säule (110) kreuzende, vorzugsweise leicht gebogene, Traverse (140) aufweist, welche Traverse (140) sich mittels eines in der Nutenschiene (112) geführten Nutensteins (132) entlang einer Vertikalrichtung (VR) der Säule (110) verstellen und mittels eines Traversen-Feststellelements (131) gegen die Säule (110) festziehen lässt.

13. Gerätehalter nach Anspruch 12, mit einem Adapterelement (120) zur Positionierung der Traverse (140) entlang der Säule (110), die bevorzugt eine zur Säule (110) weisende zylindersegmentförmige, vorzugsweise halbzylinderförmige, Einbuchtung (125) mit einer parallel zu einer Längserstreckung der Säule (110) verlaufenden Zylinderachse und vorzugsweise einen Schlitz (122) aufweist, wobei besonders bevorzugt die Einbuchtung (125) die Säule (110) so aufnimmt, dass die Säule (110) maximal in einem 180° Winkelbereich umschlossen ist.

14. Gerätehalter (100), insbesondere nach einem Ansprüche 11 bis 13, für zumindest ein zu haltendes Gerät (1), mit
- einer Basis (B) zur Anordnung an einem Bezugsobjekt (2),
- einer Kupplung (10) zur Ankupplung eines zu haltenden Gerätes (1),
- einer die Basis (B) und die Kupplung (10) verbindenden, vorzugsweise gelenkigen, Positioniermechanik (101), welche zumindest eine Säule (110) und eine die Säule (110) kreuzende Traverse (140) aufweist, wobei die Traverse (140) von einer Verschiebehülse (150) umschlossen wird, die sich in einer Horizontalrichtung (HR) entlang der Traverse (140) verschieben lässt, wobei die Verschiebehülse (150) mittels eines Verschiebehülsen-Feststellelements (160) von unten gegen die Traverse (140), vorzugsweise vertikal, arretierbar ist.

15. Verwendung einer Kupplung (10) nach einem der Ansprüche 1 bis 10, zur lösbaren Schnellkupplung eines Gerätes (1) an einen Gerätehalter (100, 100'), insbesondere einem Gerätehalter (100, 100') nach einem der Ansprüche 11 bis 14, so dass das Gerät (1) im gekoppelten Zustand mit der Kupplung (10) mittels eines Drehlagers (D1) in der Kupplung (10) um eine, vorzugsweise senkrecht, auf der Kontaktebene (KE) stehende Kupplungsachse (KA) drehbar ist.
